# EUROPEAN PATENT SPECIFICATION

(11) **EP 4 238 830 B1**
(45) Date of publication and mention of the grant of the patent: **15.01.2025**
(21) Application number: 23158320.4
(22) Date of filing: 23.02.2023
(51) Int. Cl.: B60R 13/02, B29C 43/18

(54) **MULTI-LAYERED SELF-SUPPORTING 3D SHAPED TRIM PART INCLUDING AT LEAST ONE FUNCTIONAL ELEMENT AND ITS PROCESS OF MANUFACTURING**
MEHRSCHICHTIGES SELBSTTRAGENDES 3D-FÖRMIGES VERKLEIDUNGSTEIL MIT MINDESTENS EINEM FUNKTIONSELEMENT UND HERSTELLUNGSVERFAHREN DAFÜR
PIÈCE DE GARNITURE EN 3D AUTOPORTANTE MULTICOUCHE COMPRENANT AU MOINS UN ÉLÉMENT FONCTIONNEL ET SON PROCÉDÉ DE FABRICATION

(30) Priority: 01.03.2022 DE 102022104861
(43) Date of publication of application: 06.09.2023
(73) Proprietor: SMRC Automotive Holdings Netherlands B.V., 1101 BA Amsterdam (NL); Motherson Innovations Company Ltd., London EC2N 2AX (GB)
(72) Inventor: COUSTENOBLE, Jean-Yves, 59133 PHALEMPIN (FR); SAELEN, Marc, 59251 ALLENNES-LES-MARAIS (FR); PIGNARD, Pierre, 68320 JEBSHEIM (FR); WÜSTEFELD, Thomas, 79235 VOGTSBURG (DE)
(74) Representative: Cabinet Nuss

(56) References cited:
- EP-A1- 1 418 091
- DE-A1- 102010 036 795
- DE-A1- 102012 021 866
- DE-A1- 102013 007 079
- DE-A1- 102015 220 253
- DE-B4- 10 015 158

## Description

The present invention is related to the field of integration of functions within the actual body of trim or lining parts, in particular interior trim parts of vehicles.

Such trim or lining parts include non-restrictively dashboards, door panels, central console panels, interior roof linings, trunk carpets, etc...

The aimed functions, including for example heating, lighting, sensing, detecting, receiving, transmitting, etc..., provide information and comfort enhancing services to users, drivers and/or passengers, and often require a connection to a power source or an electronical device for their activation or operation.

In this context the invention concerns a multi-layered self-supporting 3D shaped trim part including at least one functional element and its process of manufacturing.

The invention is more specifically directed towards nonplanar so-called structural "surface" parts, structural lining, covering parts, i.e., parts which have a small thickness compared to their surface extension and consists primarily in self-supporting, preferably substantially at least locally rigid, parts having a nonplanar, preferably 3D, shape.

A general underlying problem resides in the integration of the functional element(s) within the trim part as close as possible to its exposed or visible surface (A surface), in order to provide the most efficient interactions properties with the interior of the vehicle and its occupants, while simultaneously keeping the functional part easily connectable (to an electrical power delivering source or an electrical/electronical device) when installing the trim part in its mounting site.

The invention focuses especially on trim parts comprising at least: an underlying structural support layer, a covering layer viewable on or forming the exposed face of the trim part and at least one thin surface element with at least one functional area, located between the aforementioned support and covering layers and in direct contact over its entire surface with at least the support layer.

The functional element may or may not extend over the whole surface of the support layer, and several elements may be provided, while being arranged in specific locations on said support layer. A major problem arising with respect to the previous various possibilities of layouts is that of the connection of the functional element depending on the relative positioning of the functional element in the trim part towards that of the device or source it needs to be connected to. Using possible existing holes in the trim part or the nearest lateral end edge of the trim part imposes considerable constraints to design and may lead to an excessive consumption of connection material.

To try to solve this problem, it has been proposed, for example in DE 10 2015 220 253, to provide for the functional surface element a connection means extending through the support layer and providing on the rear face of said support layer, opposed to the exposed face, a connecting site or area for connection with an electrical power delivering source or an electrical/electronical device.

DE 10 210 036 795 discloses a 3D shaped trim part according to the pre-characterising part of claim 1 and a process for manufacturing such a part according to the pre-characterising part of claim 21.

Now, these existing solutions show several drawbacks. First, it makes use of a specific separate connection part. It also provides a connection site which is located directly on the rear side of the trim part and request an additional cable to establish the interconnection. The used connection part which crosses the support layer generates a structural and mechanical discontinuity in said layer. There is no real possibility to easily change the type of the integrated functional element, nor to integrate several elements simultaneously.

The aim of the invention is to propose a solution which overcomes at least some, preferably all, of the drawbacks exposed previously and advantageously does not noticeably alter the existing manufacturing process of the trim part made without any functional element.

In this regard, the invention concerns in a first aspect a multi-layered self-supporting 3D shaped trim part according to the pre-characterising part of claim 1 and showing also the features of the characterising part of claim 1.

It also concerns a process for manufacturing such a part according to the pre-characterising part of claim 21 and showing also the features of the charracterising part of claim 21.

Claims 2 to 20 and 22 to 31 are related to possible further advantageous features or alternative embodiments of the invention.

The invention will be better understood using the description below, which relates to preferred embodiments, given by way of non-limiting examples and explained with reference to the accompanying drawings, in which:
Figure 1A is a schematic sectional view of a trim part according to a first embodiment of the invention and figure 1B is a partial view of the detail A of figure 1A at a different scale,
Figure 2A is a schematic sectional view of a trim part according to a second embodiment of the invention and figure 2B is a partial view of the detail B of figure 2A at a different scale,

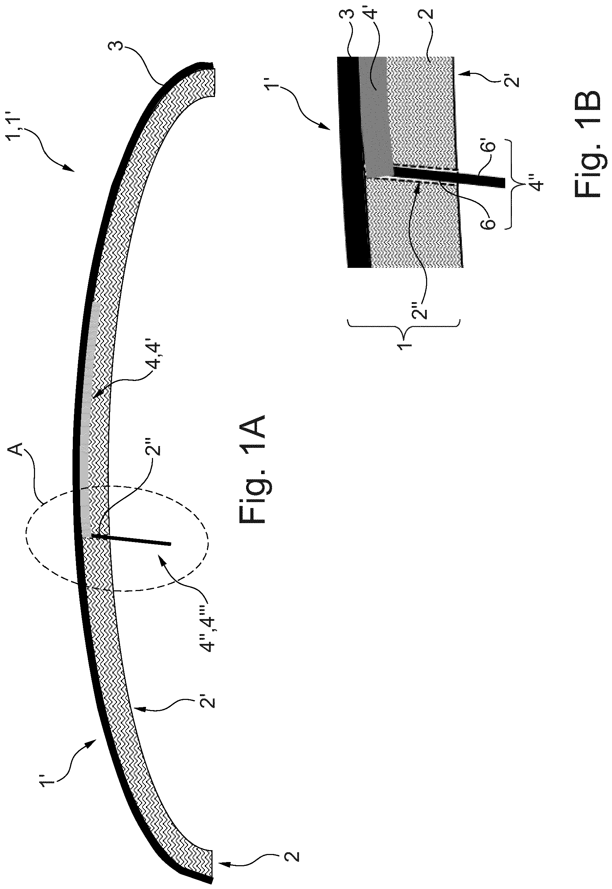

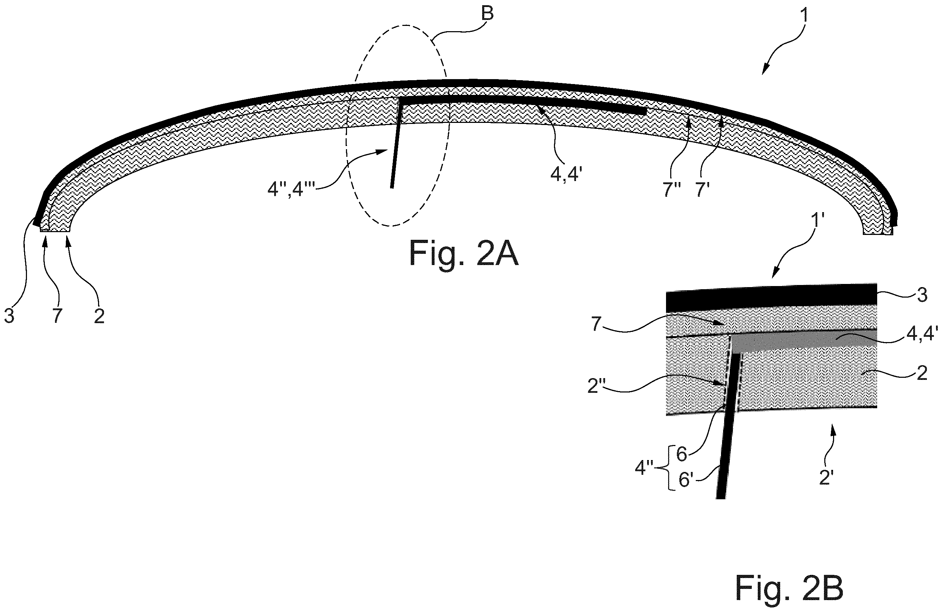

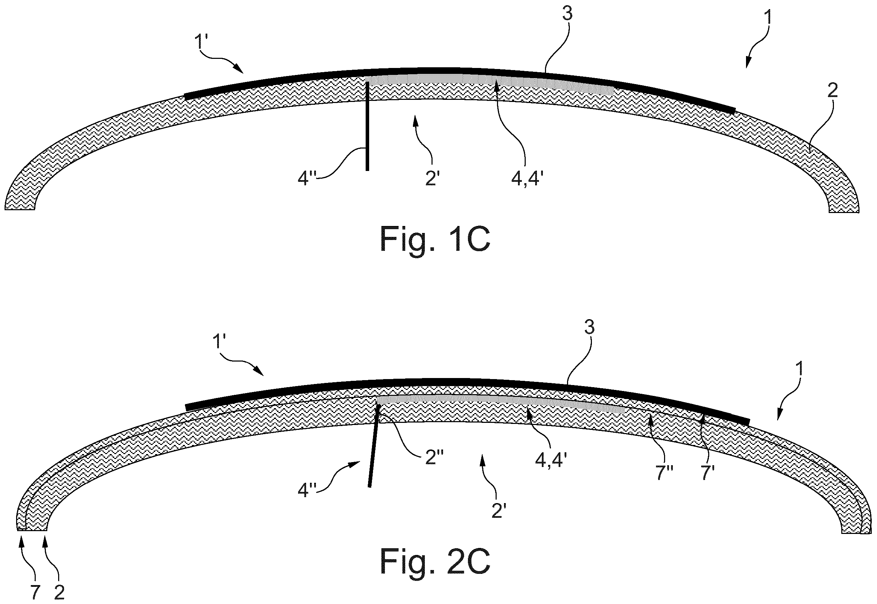

Figures 1C and 2C are alternative constructions of the trim parts of figures 1A and 2A respectively (the decorative covering layer only covers partially the underlying layers),

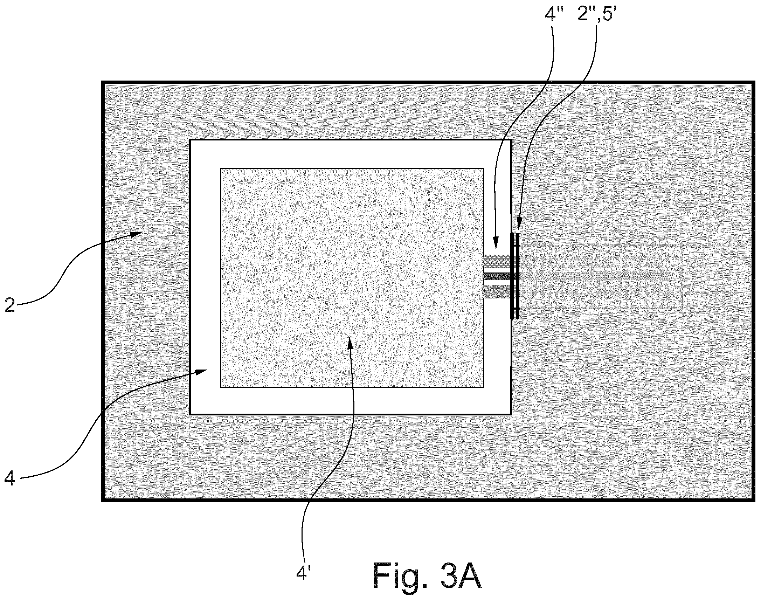

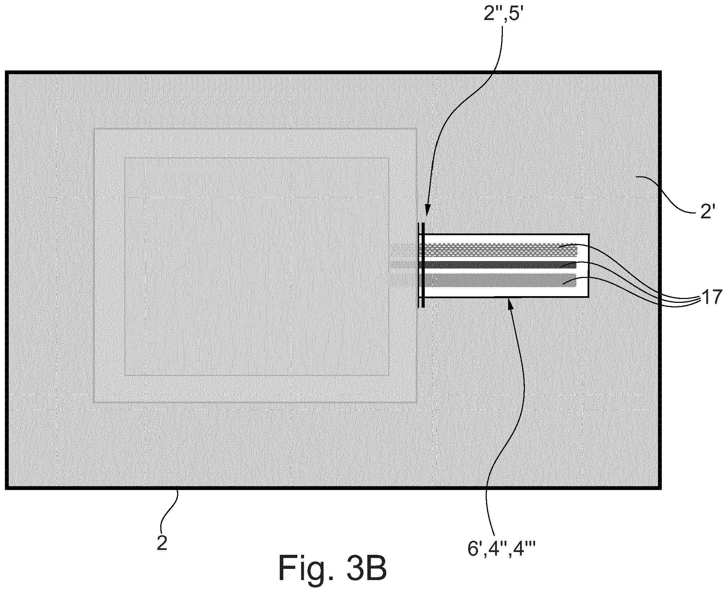

Figures 3A and 3B are respectively a top view (the decorative covering layer being suppressed) and a bottom view of the trim part shown on figure 1A,

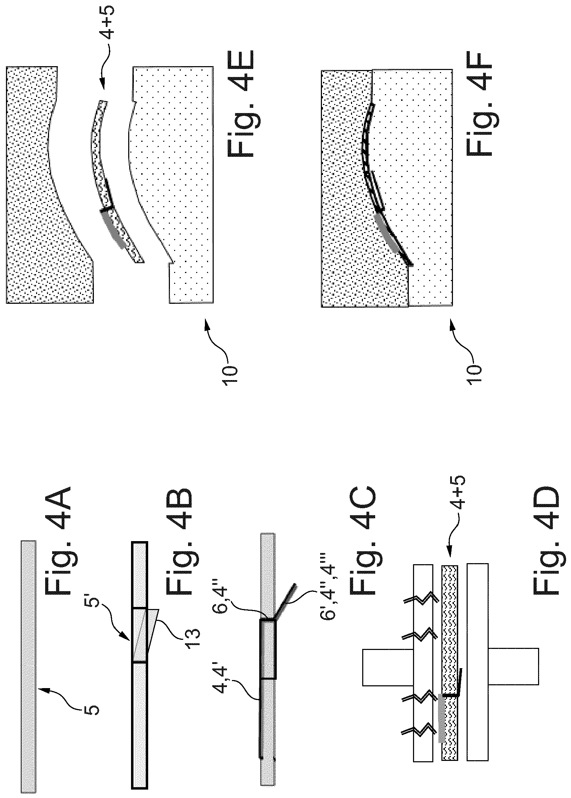

Figures 4A to 4I illustrate schematically successive steps of the process of manufacturing the trim part of figure 1A according to a first embodiment of the invention,

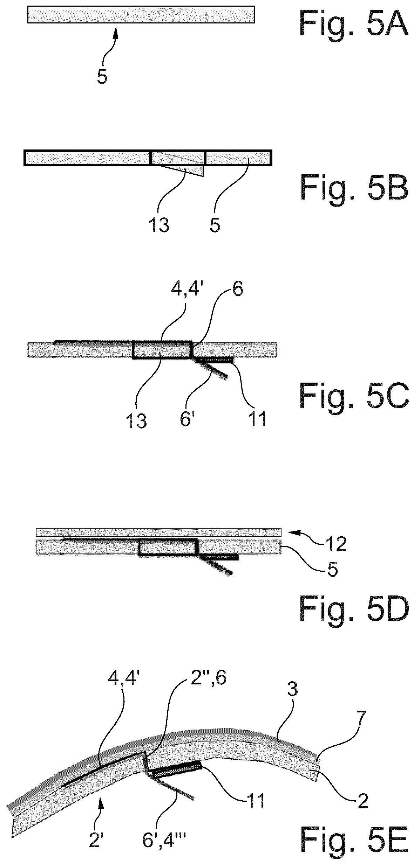

Figures 5 A to 5E illustrate schematically some steps of an alternative process of manufacturing the trim part of figure 2A, the steps corresponding to the operations similar to the ones of figures 4D to 4H are not shown,

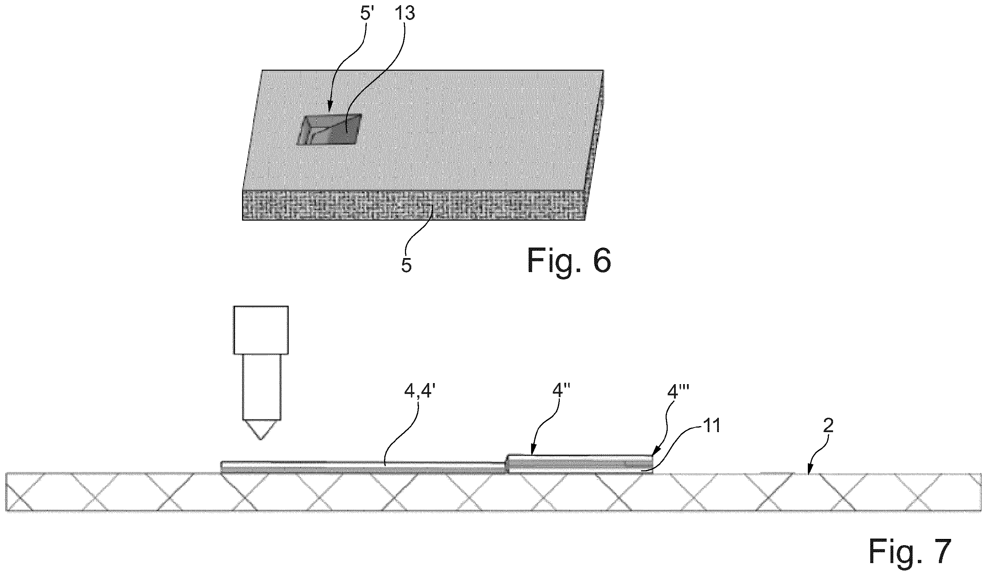

Figure 6 is a perspective view showing the cut-out in the blank after step 4B or 5B,

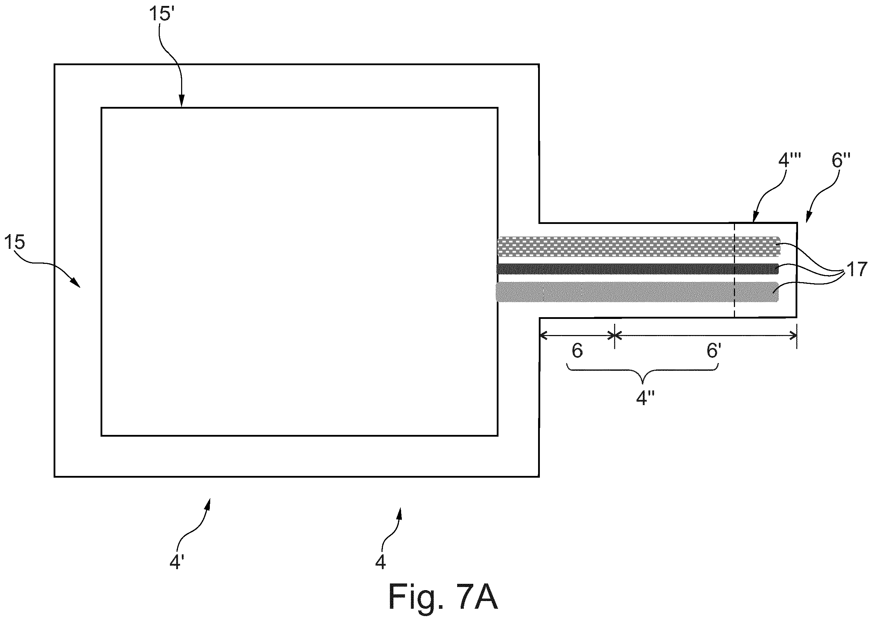

Figure 7 is a side elevational view illustrating the fixing of the functional surface element according to a particular embodiment of step 4C or 5C,
Figure 7A is a top view of the surface element of figure 7,

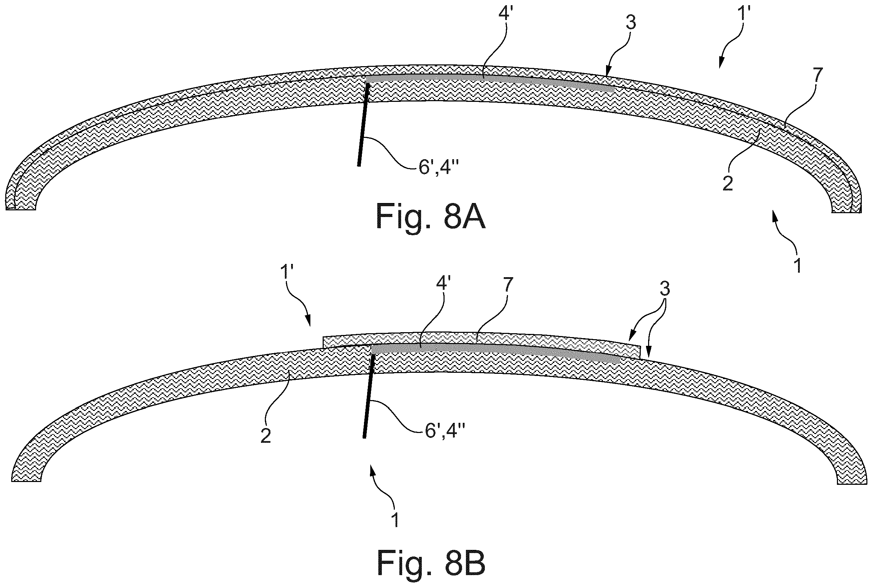

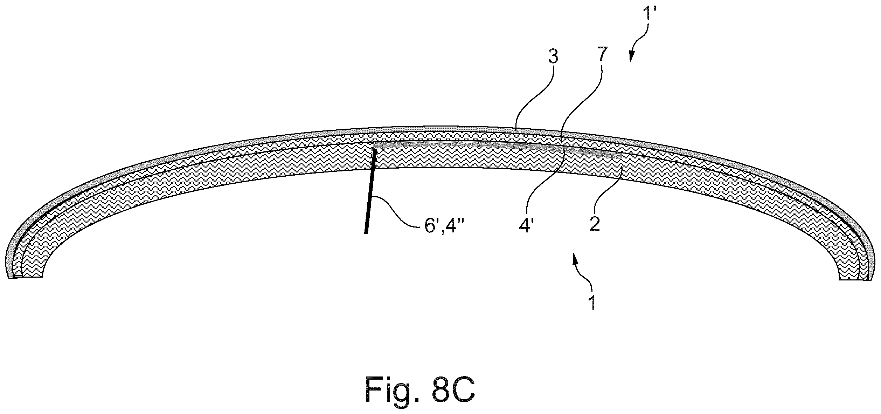

Figures 8A, 8B and 8C are schematic sectional views of a trim part according to three constructive alternatives of a third embodiment of the invention,

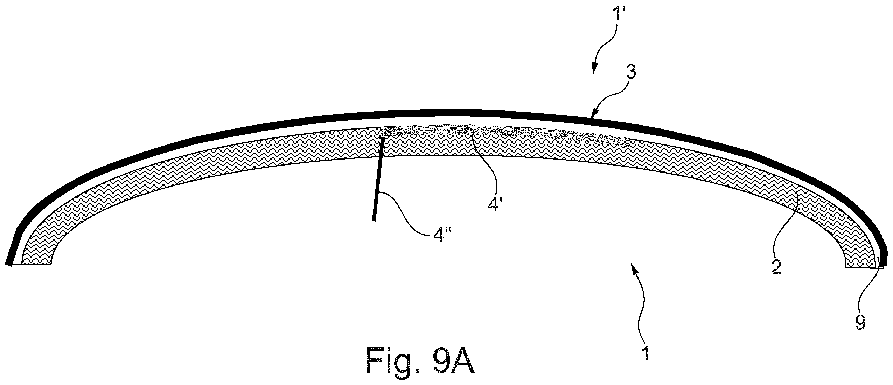

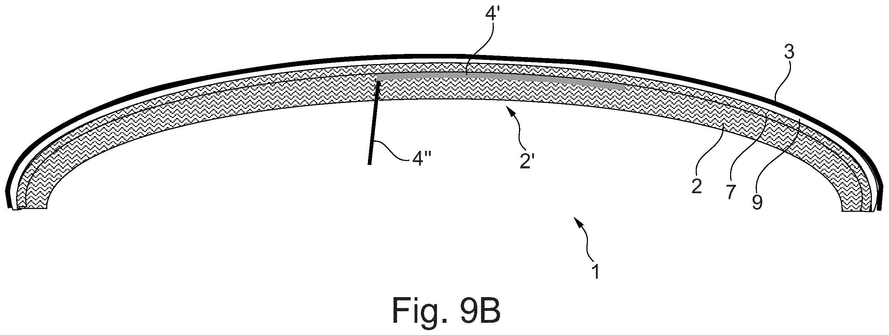

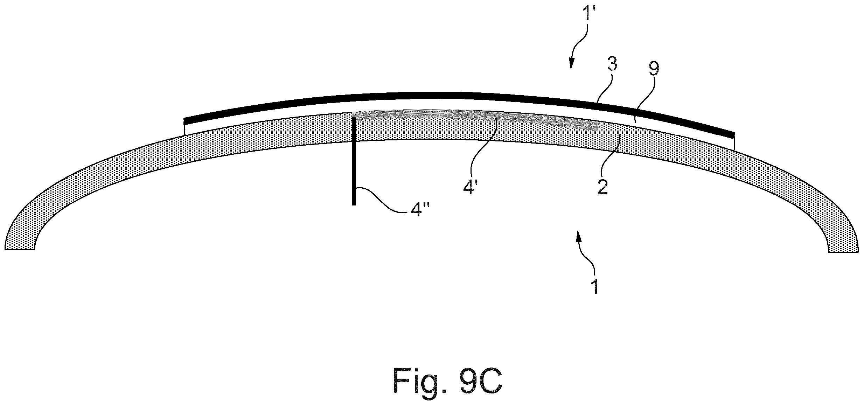

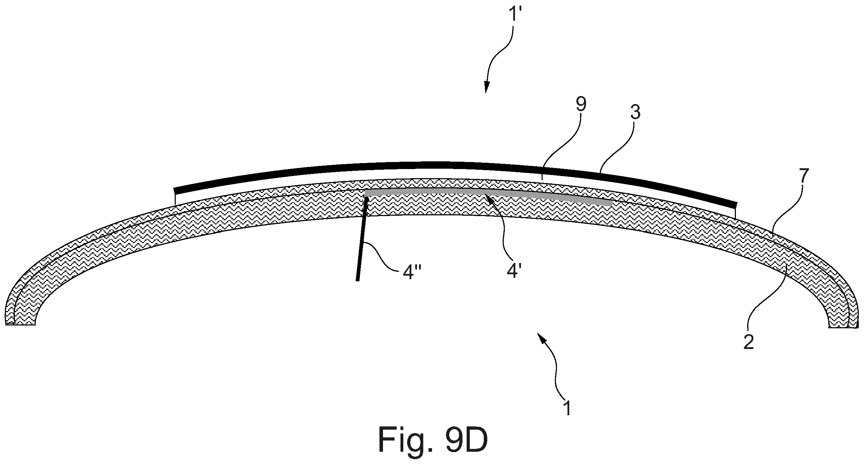

Figures 9A, 9B, 9C and 9D are schematic sectional views of a trim part according to four constructive alternatives of a fourth embodiment of the invention,

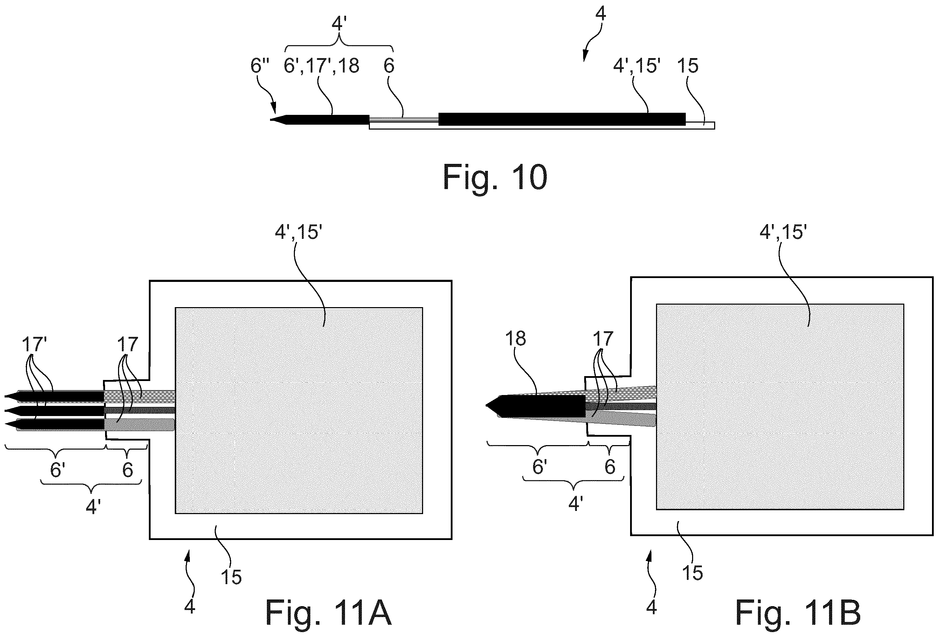

Figure 10 is a schematic side elevational view of another embodiment of the thin functional element,
Figures 11A and 11B are top views of two alternative constructions of the thin functional element of figure 10,

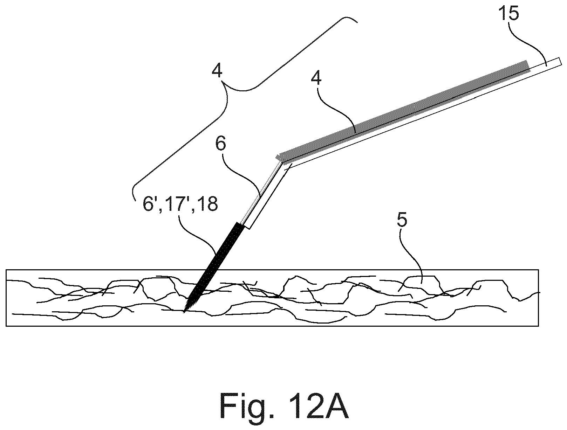

Figures 12A to 12C are schematic side elevational views illustrating steps of the mounting of the thin functional element onto the fibrous blank intended to form the support layer, more precisely the crossing of the fibrous blank by the wires or stripes of the local extension of the thin functional elements shown on figures 10 and 11,

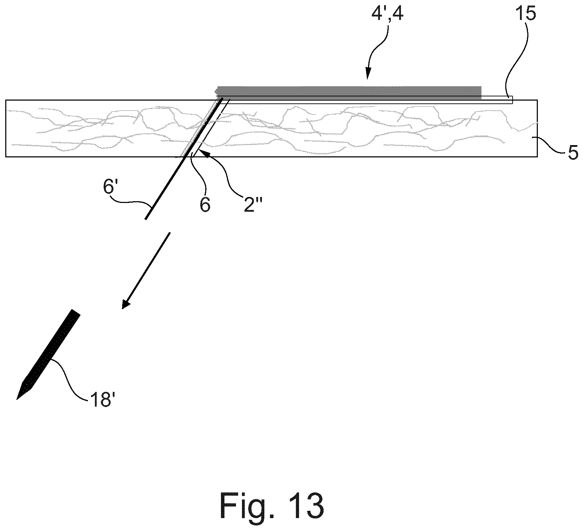

Figure 13 illustrates an alternative way to perform the crossing of the fibrous blank by the wires or stripes of the local extension of the thin functional elements, and

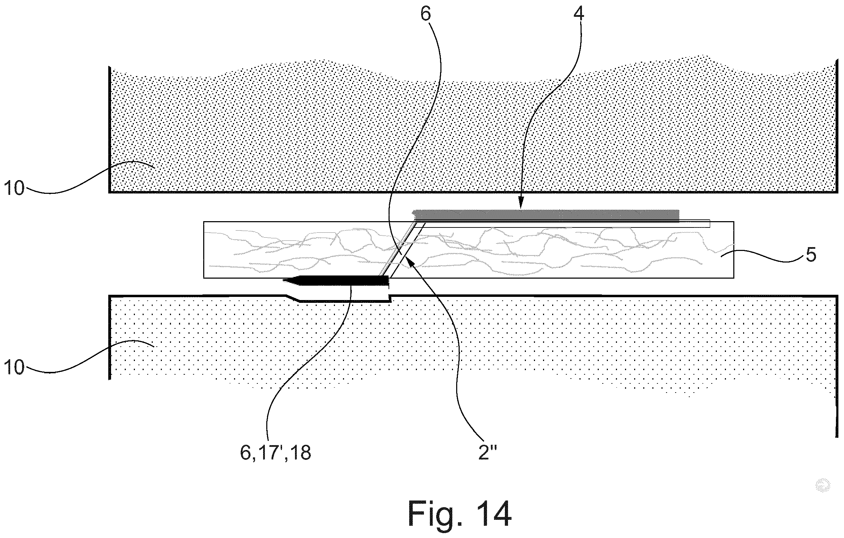

Figure 14 is a view similar to figures 4E and 4F, at a different scale and with a different mold, showing the realisation of the thermocompression stage in connection with the embodiments of figures 10 to 12.

As shown in figures 1, 2, 8 and 9 in particular, the invention concerns in a first aspect, a multi-layered self-supporting 3D shaped trim part (1) having an exposed face (1'), in particular a trim part for an automotive vehicle, such as for example an interior covering or lining part.

Said trim part (1) comprises at least one underlying structural support layer (2), at least one overlying covering layer (3, 7) viewable on or forming the exposed face (1') of the trim part (1), or at least part of it, and at least one thin surface element (4) with at least one functional area (4'), located between the aforementioned support (2) and covering (3) layers and in direct contact over its entire surface with at least the support layer (2). Said at least one functional surface element (4) is associated with at least one connection means (4") extending through the support layer (2) and providing on the rear face (2') of said support layer (2), opposed to the exposed face (1'), a connecting site or area (4‴) for connection with an electrical power delivering source and/or an electrical/electronical device.

The support layer (2) consists of a thermo-compressed thermoplastic material layer reinforced with fibres.

According to the invention, said support layer (2) has been obtained by 3D shaping by thermocompression of a blank (5) of mixed polypropylene fibres and natural fibres and the or each connection means consists of an integral local extension (4") of the functional surface element (4) which crosses the support layer (2) at a throughway (2") in the original composite material blank (5) of said support layer (2), which is sealed during thermocompression.

Thanks to these specific features, i.e. the crossing of the original blank of fibrous material (corresponding to the support layer in its raw uncompressed state) by the local extension and the subsequent sealing of said throughway, said connection means can cross the support layer at any location which is most suited and convenient, in particular with respect to the location of the source or the device it will be connected to. It is thus not constraint by any limitation resulting for example from design, or local circumstances or arrangements. Furthermore, no additional element is needed to ensure the crossing through the support layer and the integrity, tightness, and mechanical resistance of said support layer are not affected due to its constitution and its thermocompression treatment. The or each throughway (2") preferably results from a single slit through the material blank (5), with no material being taken off (no piece is cut out and the go-through opening (slot) is closed during thermocompression). Moreover, the connection means are firmly hold in place in the support layer without any additional fixing means. Finally, the operational steps necessary to integrate the functional element into the trim part are easy to perform and can be smoothly incorporated into the existing production process of the trim part. And also, the one-piece design of the functional element with its connection means allows to avoid any preassembling step and renders its handling easier.

Preferably, the trim part (1) incorporates one functional surface element (4) which has one local extension (4"). But of course, several elements (4) may be present, and the or at least one of said element(s) may comprise at least two local extensions (4"), at different locations and/or connected to different parts of the considered element (4). Moreover, the or at least one element (4) may be able to perform at least two different functions. The or each functional surface element (4) extends preferably only over a part of the surface of the support layer (2), and even when several surface elements are present, they may not cover said surface.

As shown for example on figures 1B, 2B, 3B, 7A and 10 to 12, the or each local extension (4") consists of an electrical feed line with a first portion (6) crossing the support layer (2) and embedded within it, in direct contact with its constitutive material, and with a second portion (6') extending beyond the opening of the throughway (2") on the rear face (2') of the support layer (2) and provided over at least part of its length with a connecting area (4‴) or, preferably at its free end (6"), with a connecting site (4‴), advantageously in the form of a connector. Said electrical feed line (power feed and /or electrical signals, possibly bidirectional) may comprise one or preferably at least two or more conductive wires or stripes (17).

Preferably, the electrical feed line comprises one or several individual conductive wires or ribbons for transmitting electrical power and/or signals, which are advantageously embedded in a supporting matrix and form together the local extension (4"), as illustrated in said figures.

According to the invention, and as illustrated on figures 1 to 6, the throughway (2") corresponds to a slot, notch or cut-out opening (5') realised in the original composite material blank (5) (uncompressed fibrous blank) of said support layer (2), which is sealed during thermocompression. Furthermore, the portion (6) of the local extension (4") crossing said support layer (2) is directly contacted by and embedded in its thermocompressed constitutive material.

In order not to be noticeably affected by the thermocompression stage and also to be easily lodged thin spaces and passed through slot-like apertures, and as illustrated on figures 3 and 7A, it can be envisaged that at least the second portion (6') of said feed line (4") and said the associated connecting site (4‴) have a flat shape, said second portion (6') being preferably at least partly flexible and including all the wires or stripes (17). Preferably the first portion (6) is also flatly shaped (for example has a sectional shape identical to the one of the second portion), so as to be able to cross a slot like cut in the blank (5) forming the support layer after thermocompression.

According to a second embodiment, illustrated on figures 10, 11B and 12, the second portion (6') of the feed line (4") including all the conductive wires or stripes (17) comprises or forms, at least partly over its length from its free end (6"), a rigid part (18), which is preferably tapered or pointy at said free end (6").

According to a third embodiment, illustrated on figures 10, 11A and 12, the conductive wires or stripes (17) of the local extension (4") are mutually separate and consist of individualised wires or stripes (17), each of them having possibly a rigid structure (17') over at least part of its length from its free end and being preferably tapered or sharp at said free end.

In relation with said second and third embodiments, the local extension may cross the fibrous blank (5) by simple piercing without performing any cutting in said blank. Thus, the integrity of the blank, and of the subsequent support layer, is even less affected.

As illustrated on figures 1, 2, 8 and 9, and in order to achieve a resistant and smooth incorporation, the or each functional surface element (4) is material bonded or welded with the substrate layer (2), as a result of applied heat and pressure (ie: with no use of additional adhesive substance), and is possibly at least partially embedded within the thickness of said layer (2), preferably in a substantially flush mounted way (ie: totally surface embedded, generating no local excess thickness).

According to a first aspect of the invention, shown as two different embodiments on figures 1, 2 and 8, the trim part (1) may comprise a specific covering layer (3) which constitutes the top decorative and/or protective layer of the trim part (1) and is viewable on, or forms at least part of, the exposed face (1') of said trim part (1). Said top layer (3) can be either a protective coating, such as a paint or a transparent or translucid varnish, possibly incorporating additional decorative elements, such as for example pigments, particles or similar, or a material decorative layer selected from the group comprising textile fabrics, nonwoven fleeces, PVC skins, TPO skins, PP films, leather skins and cork, wood or stone veneers.

As illustrated in the figures 9 by means of four constructive variants, a comfort layer (9) consisting of a foam layer may be present on the back or rear side of the material decorative layer (3), opposed to the exposed face (1') of said trim part (1). Said comfort layer (9) is preferably a layer which is preassembled with the decorative layer (3) in the form of a laminated layer.

According to a second aspect of the invention, shown by way of two different embodiments on figures 2 and 8C, the trim part (1) may comprise at least two covering layers, namely a top covering layer (3) forming an exposed decorative and/or protective layer of said trim part (1) and at least one intermediary layer (7) which is located between the support layer (2) and said top covering layer (3) and which is covering at least the functional area(s) (4') of the at least one surface element (4) while shielding it from the decorative layer (3).

The top covering layer (3) may be in direct contact with the intermediary layer (7), as shown on figure 8C or indirectly through its rear side comfort layer (9), as shown on figure 9B.

Said at least one additional intermediary layer (7) is also in direct contact and joined with the functional area(s) (4') of the at least one surface element (4) and with the support layer (2), outside or beyond said functional area(s) (4') of said at least one surface element (4), and covers also at least the area of the throughway (2"), preferably the whole support layer (2)

The decorative layer (3), possibly associated with a comfort layer (9) on its rear or back side, covers at least partially, preferably substantially entirely, the support layer (2), and in any case either the functional area(s) (4') of the at least one surface element (4) or an additional intermediary layer (7), *depending on the presence or not of such a layer (7).*

It can be envisaged that said layers (2, 3, 7, 9) have all similar surface extensions, that the support layer (2) has a greater surface extension than the other layer(s) or that the support layer (2) and possibly the intermediary layer (7) have greater surface extensions than the decorative layer (3).

When the decorative layer (3) only extends partly over the trim part (1), then said additional intermediary layer (7) may be extending beyond said decorative layer and thus contribute to the visual aspect of the exposed face (1'), as shown in figure 2C). Alternatively, the surface extension of said additional intermediary layer (7) may be adjusted to said partial extension (see figures 9C and 9D-the layer 7 or 2 arranged underneath said additional intermediary layer does then contribute to the visual aspect of the trim part (1).

When the intermediate layer (7) (figure 8B) and/or the comfort layer (9) (figure 9C) extend only over a part of the surface of the support layer (2), while always totally covering the functional part(s) (4), the peripheral edge of said layers (7, 9) form a protruding shoulder, preferably covered by the decorative layer (3).

When said decorative layer (3) covers only partly the intermediate or support layer (7, 2) it may also be a protruding area (i.e. form a peripheral shoulder) (figure 2C) or be arranged relatively flush with the underneath layer (2 or 7) (see figure 1C).

As illustrated on figures 8A and 8B, and in line with another embodiment of the invention, the exposed face (1') of the trim part (1) is partly or totally formed by an additional layer (7) which constitutes the top covering layer, a complementary part of the exposed face (1') being possibly formed by the substrate layer (2). Thus, said additional layer (7) covers at least and is in direct contact and joined with the functional area(s) (4') of the at least one surface element (4) and with the support layer (2), outside or beyond said functional area(s) (4') of the at least one surface element (4), and covers also the area of the throughway (2"), preferably the whole support layer (2).

According to a possible advantageous feature of the invention, the intermediary or additional layer (7) also consists of a thermo-compressed thermoplastic material layer, possibly reinforced with fibres, and is material bonded or welded with the substrate layer (2), as result of applied heat and pressure, its constitutive thermoplastic material being at least compatible, if not identical, with the thermoplastic material of said support layer (2).

Thus, the functional surface element (4) is encased in a shell of thermo-compressed thermoplastic material. Both layers (2 and 7) may be totally identical, or alternatively the layer (7) may have at least slightly different properties or a different constitution (smaller thickness, lower density, added substances, ...) depending on the specific functions it must fulfil. For example, layer (7) may be thinner and have better heat diffusion properties than layer (2), so that if the functional surface element (4) is a heating element, the heat is transmitted mainly towards the exposed surface (1').

In relation to another aspect of the invention, the decorative covering layer (3) is assembled with the support layer (2) and the functional area(s) (4') of the thin surface element (4) or with an additional intermediary layer (7), either directly as a pressure applied or overmolded layer, or by means of an adhesive or a glue. As shown on figures 1, 2, 8 and 9, the trim part (1) may comprise one additional intermediary layer (7 or 9), two additional intermediary layers (7 and 9) or none.

As it appears on figures 1A, 2A, 1C, 2C, 5E, 8 and 9, and advantageously whichever embodiment or layout of the trim part (1) of the invention is considered, the functional area(s) (4') of the thin surface element (4) is(are) always covered completely and continuously on both sides with at least one layer (2, 3, 7, 9), and thus preferably totally encapsulated between said layers at the end of the process, but without being totally embedded within one of said layers (said thin element rests on the surfaces of said layers).

To allow an easy handling and processing of the thin functional surface element (4), as well as a good bonding with at least the support layer (2), and as shown on figures 3, 7 and 10 to 12, the or each thin functional surface element (4) is assembled with or incorporated within a supporting matrix or layer (15) compatible with the material of the support layer (2). Said element is preferably designed to perform at least one of the functions selected in the group comprising: heating, illuminating, displaying images, graphics and/or text, pressure or contact sensing, sensing at least one physical parameter of its environment, receiving and/or emitting electromagnetic waves. According to a possible practical aspect of the invention, the functional surface element (4) comprises a thermoplastic or textile supporting matrix (15) bearing or incorporating at least one electronic or electric component (15') designed to perform the expected function of said functional element (4), and preferably also the conductive wires or stripes (17) of the local extension (4').

In relation to a favourable embodiment of the invention, the material of the support layer (2) is composed of a polypropylene matrix (PP) incorporating natural fibres (NF) as reinforcing fibres with a weight percentage PP/NF comprised between 65%/35% and 40%/60%, preferably between 60%/40% and 50%/50%, and said support layer (2) shows a surface weight between 1400g/m² and 2200g/m², preferably between 1600g/m² and 2000g/m² and a thickness between 1,4 mm and 3,0 mm, preferably between 1,8 mm and 2,5 mm.

According to a first constructive aspect, the material of the covering layer (7) forming an additional intermediary layer is composed of a polypropylene matrix (PP) incorporating natural fibres (NF) with a weight percentage PP/NF comprised between 65%/35% and 40%/60%, preferably between 60%/40% and 50%/50%, and said covering layer (7) shows a surface weight between 100g/m² and 500g/m², preferably between 200g/m² and 400g/m² and a thickness between 0,1 mm and 1,0 mm, preferably between 0,4 mm and 0,7 mm.

According to a second constructive aspect, the covering layer (7) forming an additional intermediary layer is entirely made of polypropylene (PP) or polyethylene (PE), polyethylene terephthalate (PET) or PET bicomponent coextruded, and said covering layer (7) shows a surface weight between 100g/m² and 500g/m², preferably between 200g/m² and 400g/m² and a thickness between 0,1 mm and 1,0 mm, preferably between 0,4 mm and 0,7 mm.

Preferably, the reinforcing fibres are natural fibres, such as for example flax, sisal, jute, hemp or kenaf fibres, thermoplastic fibres, glass fibres, carbon fibres or mixtures of at least two different types of such fibres.

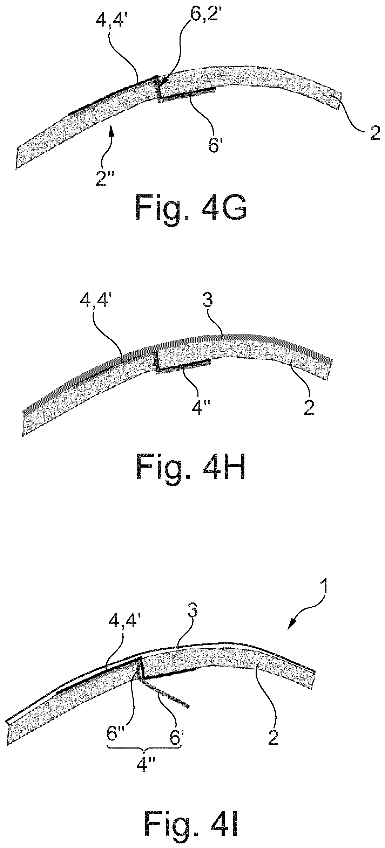

The invention also encompasses, as illustrated on figures 4 and 5, a process for manufacturing a multi-layered self-supporting 3D shaped trim part (1) as described before, and comprising at least one thin functional surface element (4).

According to the invention, said process is characterised in that it consists mainly in:
- i) providing a blank (5) of mixed polypropylene fibres and natural fibres;
- ii) mounting a thin functional surface element (4) on one side of said blank (5) with a local extension (4") of said element (4) extending through the blank (5) onto the other side of it-figure 4C, 5C or 12;
- iii) 3D shaping by thermocompression said blank (5) equipped with said element (4) into a support layer (2) incorporating said surface element (4), the portion (6) of the local extension (4") crossing said support layer (2) and being thus directly contacted by and embedded in its constitutive material, said shaped support layer (2) showing substantially the shape intended for the trim part (1)-figures 4D to 4G;
- iiii) adding at least a top covering layer (3) intended to form the viewable or exposed face (1') of the trim part (1), and possibly at least one intermediary layer (7)-figure 4H or 5E.

It should be noted that the process illustrated on figures 4 results in a trim part (1) having only a decorative layer (3), whereas the process illustrated in figures 5 (NB: the thermo-compressing stages are not shown on these figures) results in a trim part (1) having a decorative layer (3) and an intermediary layer (7).

More precisely, and according to a first embodiment of the invention, the manufacturing method may comprise the following successive operational steps:
- a) providing a mat or fleece of mixed polypropylene fibres and natural fibres, which have been preferably needle-punched and/or subjected to a chemical fibre bonding treatment, and cutting a blank (5) of said material having a size adapted to the size of the trim part (1)-figure 4A or 5A;
- b) making a through slot, notch or cut-out opening (5') in said blank (5)-figure 4B, 5B or 6;
- c) providing a flexible and thin functional surface element (4)-figures 7A;
- d) arranging and possibly fixing, for example by welding, sewing or gluing, said thin functional surface element (4) on said blank (5) -figure 7- and pushing the local extension (4") of said element (4) through said slot, notch or cut-out opening (5') so that at least its connecting site or area (4‴), preferably together with a portion (6') of the local extension (4"), is located on the other side of the blank (5)-figure 4C or 5C ;
- e) subjecting said blank (5) equipped with said surface element (4) to heating, possibly with contact under pressure, so that the polypropylene fibres of the blank (5) find themselves in a given state of a stickiness and plasticity and that the surface element (4) gets attached and possibly at least partially integrated into the blank (5)-figure 4D;
- f) subjecting said preheated set [blank (5)-surface element (4)] to 3D shaping through compression, for example in a forming mould (10), so as to produce the support layer (2) with the surface element (4) integrated in it and with the slot, notch or cut-out opening (5') transformed into a throughway (2") sealed around a crossing portion (6) of the local extension (4") of the surface element (4)-figures 4E, 4F and 4G;
- g) adding, during the previous compression phase f) or in a subsequent step, at least a top covering layer (3), so as to form the viewable or exposed face (1') of the trim part (1)-figures 5D;
- h) separating the portion (6') of the local extension (4") extending beyond the opening of the throughway (2") on the rear face (2') of the support layer (2) and of the connecting site or area (4"'), from said rear face (2')-figures 4I and 5E.

The opening (5') which will form the throughway (2") in the trim part (1) results preferably from a single slit or cut through the material blank (5), with no material being cut off (no piece is cut out and the go-through opening (slot) is closed during thermocompression). Said slit or slot is advantageously realised by using a cold blade, for example mounted onto and manipulated by a robotic arm.

Preferably, and as shown on figures 4B, 5B and 6, realising the opening (5') consists in realising a through U-shaped cut (5') in the blank (5), when seen in the median plane of said blank, so as to provide a bendable tong (13) of mat or fleece material, the local extension (4") being preferably a flat cable or wire.

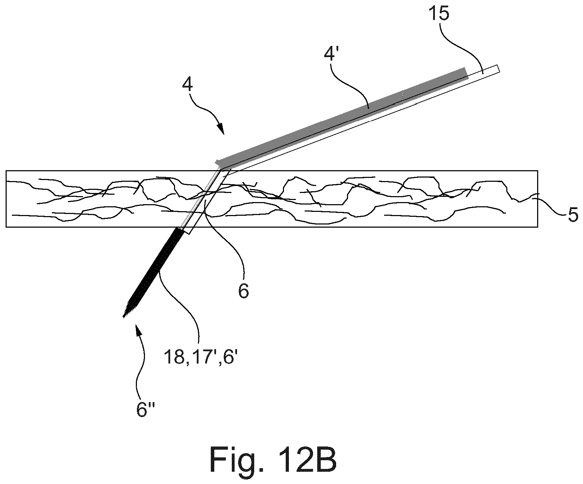

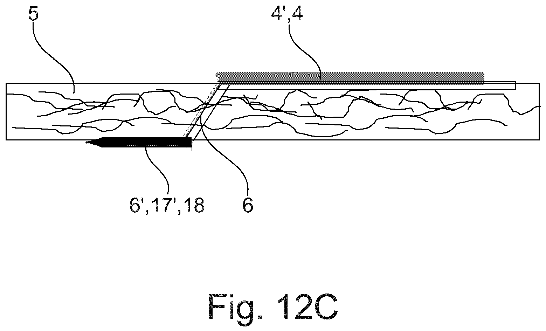

In relation to a second embodiment, and as illustrated on figures 11B and 12, step ii) comprises providing a surface element (4) with a second portion (6') of the local extension (4") including all the conductive wires or stripes (17) and forming, at least partly over its length from its free end (6"), a rigid part (18), which is preferably tapered or pointy at said free end (6"), like a needle, and pushing said rigid (18) part through the blank (5) of mixed polypropylene fibres and natural fibres, so as to locate the second portion (6') on the other side of it.

In relation to a third embodiment, and as illustrated in figures 11A and 12, step ii) comprises providing a surface element (4) wherein the wires or stripes (17) of the local extension (4") are mutually separate and consist of individualised wires or stripes (17), each of them having possibly a rigid structure (17') over at least part of its length from its free end and being preferably tapered or sharp at said free end, like needles, and pushing said rigid structures (17') through the blank (5) of mixed polypropylene fibres and natural fibres, so as to locate the second portion (6') of the local extension (4") on the other side of it.

In relation to a fourth embodiment of the invention, step ii) comprises providing a surface element (4) wherein the wires or stripes (17) of the local extension (4") are mutually separate and consist of individualised wires or stripes (17), introducing said wires or stripes (17) into a hollow guiding element (18'), preferably tapered, such as a hollow needle, and pushing said guiding element (18') through the blank (5) of mixed polypropylene fibres and natural fibres, so as to locate the parts of the wires or stripes forming the second portion (6') of the local extension (4") on the other side of it, and then extracting said wires or stripes (17) from said guiding element (18') and removing the latter.

These second to fourth embodiments in relation to step ii) may be considered as alternatives or more detailed processes of step d) of the previous first embodiment.

The fin functional element (4) may comprise a support layer made of textile (nonwoven, fleece, woven, knitted), film, skin, plastic layer, metallic layer or similar. To fulfil the requested function(s) electric yarns can be integrated, or laid on the previous support; also electric conductor activatable ink can be laid on the support. All these conductive components or materials have a specific design to make the power flow all around, or to give the specific functional effect. The functional component may also be an electroluminescent film to transmit light.

Depending on its nature and functionality, the at least one thin surface element (4) with at least one functional area (4'), which has generally a thickness of less than 3 mm, may advantageously present a thickness comprised between 0,1 and 2,0 mm, preferably between 0,1 and 1,0 mm.

As shown on figures 5C and 5D, and before the thermocompression step, a protection element (11) is advantageously arranged on the rear side (2') of the blank (5), where the second portion (6') of the local extension (4") emerges from the blank (5), said protection element (11) forming a shielding layer between the local extension (4") of the surface element (4) and said rear side (2') and facilitating the separation of the protruding portion (6') of the local extension (4") and of the connecting site or area (4‴), from said rear face (2').

As illustrated on figure 5D for example, and in order to achieve a decorative layer (7) or an additional intermediary covering layer (7), the process may also consist in providing another blank (12) of material made of a mixture of polypropylene fibres and natural fibres, made of polypropylene fibres or made of polyethylene fibres and arranging said second blank (12) on the first blank (5) equipped with said surface element (4) after step ii) or after step d) mentioned previously, and then shaping together by thermo-compression said two associated blanks (5, 12) and said element (4) so as to produce a blank part in the shape of the intended trim part (1) and incorporating the support layer (2), the surface element (4) and an additional layer (7) corresponding to said thermo-compressed other blank (12) and covering at least the surface element (4) (if an additional decorative covering layer is added on top of it). As illustrated in the figures 1 to 9, the inventive manufacturing process may also comprise applying a top covering layer (3) which extends over a part of or the whole support layer (2), and covers at least the functional area(s) (4') of the at least one surface element (4), said top covering layer (3) consisting either in a protective coating, such as a paint or a transparent or translucid varnish, possibly incorporating additional decorative elements, such as for example pigments, particles or similar, or in a material decorative layer selected from the group comprising textile fabrics, nonwoven fleeces, PVC skins, TPO skins, PP films, leather skins and cork, wood or stone veneers. The inventive manufacturing process may also provide that a comfort layer (9) consisting of a foam layer is present on the back or rear side of the material decorative layer (3), opposed to the exposed face (1') of said trim part (1).

In order to achieve an accurate mounting, the arrangement of the thin functional surface element (4) on the blank (5) intended to form the support layer (2) may be guided and maintained, preferably locked in position, by means of indexing elements when placed in the thermoforming mould (10).

The invention is of course not limited to the embodiments described and represented in the accompanying drawings. Modifications remain possible, particularly from the viewpoint of the composition of the various elements or by substitution of technical equivalents without thereby exceeding the field of protection of the invention as defined by the claims.

## Claims

1. A multi-layered self-supporting 3D shaped trim part (1) having an exposed face (1'), in particular a trim part for an automotive vehicle, such as for example an interior covering or lining part, said trim part (1) comprising at least one underlying structural support layer (2), at least one overlying covering layer (3, 7) viewable on or forming the exposed face (1') of the trim part (1), or at least part of it, and at least one thin surface element (4) with at least one functional area (4'), located between the aforementioned support (2) and covering (3, 7) layers and in direct contact over its entire surface with at least the support layer (2), wherein said support layer (2) consists of a thermo-compressed thermoplastic material layer reinforced with fibres, said at least one functional surface element (4) being associated with at least one connection means (4") extending through the support layer (2) and providing on the rear face (2') of said support layer (2), opposed to the exposed face (1'), a connecting site or area (4‴) for connection with an electrical power delivering source and/or an electrical/electronical device,
said trim part (1) being **characterized in that** said support layer (2) has been obtained by 3D shaping by thermocompression of a blank (5) of mixed polypropylene fibres and natural fibres, **in that** the or each connection means consists of an integral local extension (4") of the functional surface element (4) which crosses the support layer (2) at a throughway (2") in the original uncompressed composite material blank (5) of said support layer (2), corresponding to a slot, notch or cut-out opening (5') realised in the original composite material blank (5) of said support layer (2), which is sealed during thermocompression, and **in that** the portion (6) of the local extension (4") crossing said support layer (2) is directly contacted by and embedded in its thermocompressed constitutive material.

2. Trim part (1) according to claim 1, **characterised in that** the or each local extension (4") consists of an electrical feed line, comprising one or several conductive wires or stripes (17), with a first portion (6) crossing the support layer (2) and embedded within it, in direct contact with its constitutive material, and with a second portion (6') extending beyond the opening of the throughway (2") on the rear face (2') of the support layer (2) and provided over at least part of its length with a connecting area (4‴) or, preferably at its free end (6"), with a connecting site (4"'), advantageously in the form of a connector.

3. Trim part (1) according to claim 1 or 2, **characterised in that** at least the second portion (6') of the feed line (4") and the associated connecting site (4‴) have a flat shape, said second portion (6') being preferably at least partly flexible and including all the wires or stripes (17).

4. Trim part (1) according to claim 2, **characterized in that** the second portion (6') of the feed line (4") including all the conductive wires or stripes (17) comprises or forms, at least partly over its length from its free end (6"), a rigid part (18), which is preferably tapered or pointy at said free end (6").

5. Trim part (1) according to claim 2, **characterized in that** the conductive wires or stripes (17) of the local extension (4") are mutually separate and consist of individualised wires or stripes (17), each of them having possibly a rigid structure (17') over at least part of its length from its free end and being preferably tapered or sharp at said free end.

6. Trim part (1) according to anyone of claims 1 to 5, **characterised in that** the or each functional surface element (4) is material bonded or welded with the substrate layer (2), as result of applied heat and pressure, and is possibly at least partially embedded within the thickness of said layer (2), preferably in a substantially flush mounted way.

7. Trim part (1) according to anyone of claims 1 to 6, **characterised in that** the or each thin functional surface element (4) is assembled with or incorporated within a supporting matrix or layer (15) compatible with the material of the support layer (2) and is designed to perform at least one of the functions selected in the group comprising: heating, illuminating, displaying images, graphics and/or text, pressure or contact sensing, sensing at least one physical parameter of its environment, receiving and/or emitting electromagnetic waves.

8. Trim part (1) according to claim 7, **characterised in that** the functional surface element (4) comprises a thermoplastic or textile supporting matrix (15) bearing or incorporating at least one electronic or electric component (15') designed to perform the expected function of said functional element (4), and preferably also the conductive wires or stripes (17) of the local extension (4').

9. Trim part (1) according to anyone of claims 1 to 8, **characterised in that** it comprises a specific covering layer (3) which constitutes the top decorative and/or protective layer of the trim part (1) and is viewable on, or forms at least part of, the exposed face (1') of said trim part (1), said top layer (3) being either a protective coating, such as a paint or a transparent or translucid varnish, possibly incorporating additional decorative elements, such as for example pigments, particles or similar, or a material decorative layer selected from the group comprising textile fabrics, nonwoven fleeces, PVC skins, TPO skins, PP films, leather skins and cork, wood or stone veneers.

10. Trim part (1) according to claim 9, **characterised in that** a comfort layer (9) consisting of a foam layer is present on the back or rear side of the material decorative layer (3), opposed to the exposed face (1') of said trim part (1).

11. Trim part (1) according to anyone of claims 1 to 10, **characterised in that** it comprises at least two covering layers, namely a top covering layer (3) forming an exposed decorative and/or protective layer of said trim part (1) and at least one additional intermediary layer (7) which is located between the support layer (2) and said top covering layer (3) and which is covering at least the functional area(s) (4') of the at least one surface element (4) while shielding it from the decorative layer (3).

12. Trim part (1) according to claim 11, **characterised in that** said at least one additional intermediary layer (7) is in direct contact and joined with the functional area(s) (4') of the at least one surface element (4) and with the support layer (2), outside or beyond said functional area(s) (4') of the at least one surface element (4), and covers also at least the area of the throughway (2"), preferably the whole support layer (2).

13. Trim part (1) according to anyone of claims 1 to 8, **characterised in that** the exposed face (1') of the trim part (1) is partly or totally formed by an additional layer (7) which constitutes the top covering layer, a complementary part of the exposed face (1') being possibly formed by the substrate layer (2), said additional layer (7) covering at least and being in direct contact and joined with the functional area(s) (4') of the at least one surface element (4) and with the support layer (2), outside or beyond said functional area(s) (4') of the at least one surface element (4), and covering also the area of the throughway (2"), preferably the whole support layer (2).

14. Trim part (1) according to anyone of claims 11 to 13, **characterised in that** the intermediary or additional layer (7) also consists of a thermo-compressed thermoplastic material layer, possibly reinforced with fibres, and is material bonded or welded with the substrate layer (2), as result of applied heat and pressure, its constitutive thermoplastic material being at least compatible, if not identical, with the thermoplastic material of said support layer (2).

15. Trim part (1) according to anyone of claims 1 to 12, **characterised in that** the decorative layer (3), possibly associated with a comfort layer (9) on its rear or back side, covers at least partially, preferably substantially entirely, the support layer (2), and in any case either the functional area(s) (4') of the at least one surface element (4) or an additional intermediary layer (7).

16. Trim part (1) according to anyone of claims 1 to 12 and 15, **characterised in that** the decorative covering layer (3) is assembled with the support layer (2) and the functional area(s) (4') of the thin surface element (4) or with an additional intermediary layer (7), either directly as a pressure applied or overmolded layer, or by means of an adhesive or a glue.

17. Trim part (1) according to anyone of claims 1 to 16, **characterised in that** the material of the support layer (2) is composed of a polypropylene matrix (PP) incorporating natural fibres (NF) as reinforcing fibres with a weight percentage PP/NF comprised between 65%/35% and 40%/60%, preferably between 60%/40% and 50%/50%, and **in that** said support layer (2) shows a surface weight between 1400g/m² and 2200g/m², preferably between 1600g/m² and 2000g/m² and a thickness between 1,4 mm and 3,0 mm, preferably between 1,8 mm and 2,5 mm.

18. Trim part (1) according to anyone of claims 1 to 17, **characterised in that** the material of the covering layer (7) forming an additional or intermediary layer is composed of a polypropylene matrix (PP) incorporating natural fibres (NF) as reinforcing fibres with a weight percentage PP/NF comprised between 65%/35% and 40%/60%, preferably between 60%/40% and 50%/50%, and **in that** said covering layer (7) shows a surface weight between 100g/m² and 500g/m², preferably between 200g/m² and 400g/m² and a thickness between 0,1 mm and 1,0 mm, preferably between 0,4 mm and 0,7 mm.

19. Trim part (1) according to anyone of claims 1 to 17, **characterised in that** the covering layer (7) forming an additional or intermediary layer is entirely made of polypropylene (PP) or polyethylene (PE), polyethylene terephthalate (PET) or PET bicomponent coextruded, and **in that** said covering layer (7) shows a surface weight between 100g/m² and 500g/m², preferably between 200g/m² and 400g/m² and a thickness between 0,1 mm and 1,0 mm, preferably between 0,4 mm and 0,7 mm.

20. Trim part (1) according to anyone of claims 1 to 19, **characterised in that** the reinforcing fibres are natural fibres, such as for example flax, sisal, jute, hemp or kenaf fibres, thermoplastic fibres, glass fibres, carbon fibres or mixtures of at least two different types of such fibres.

21. Process for manufacturing a multi-layered self-supporting 3D shaped trim part (1) according to anyone of claims 1 to 20, comprising at least one thin functional surface element (4), said process consisting mainly in:
- i) providing a blank (5) with a throughway (2") corresponding to a slot, notch or cut-out opening (5') realised in the original composite material blank (5) of said support layer (2);
- ii) mounting a thin functional surface element (4) on one side of said blank (5) with a local extension (4") of said element (4) extending through said cut-out opening (5') of the blank (5) onto the other side of it;
- iii) 3D shaping by thermocompression said blank (5) equipped with said element (4) into a support layer (2) incorporating said surface element (4), said shaped support layer (2) showing substantially the shape intended for the trim part (1);
- iiii) adding at least a top covering layer (3, 7) intended to form at least partly the viewable or exposed face (1') of the trim part (1), and possibly at least one intermediary layer,
said process being **characterised**
**in that** said blank (5) is a blank of mixed polypropylene fibres and natural fibres and
**in that** the portion (6) of the local extension (4") crosses said support layer (2) and is thus directly contacted by and embedded in its constitutive material, as the throughway (2") is sealed during thermocompression.

22. Process according to claim 21, **characterised in that** it comprises more precisely the following successive operational steps:
- a) providing a mat or fleece of mixed polypropylene fibres and natural fibres, which have been preferably needle-punched and/or subjected to a chemical fibre bonding treatment, and cutting a blank (5) of said material having a size adapted to the size of the trim part (1);
- b) making a through slot, notch or cut-out opening (5') in said blank (5);
- c) providing a flexible and thin functional surface element (4);
- d) arranging and possibly fixing, for example by welding, sewing or gluing, said thin functional surface element (4) on said blank (5) and pushing the local extension (4") of said element (4) through said slot, notch or cut-out opening (5') so that at least its connecting site or area (4‴), preferably together with a portion (6') of the local extension (4"), is located on the other side of the blank (5);
- e) subjecting said blank (5) equipped with said surface element (4) to heating, possibly with contact under pressure, so that the polypropylene fibres of the blank (5) find themselves in a given state of a stickiness and plasticity and that the surface element (4) gets attached and possibly at least partially integrated into the blank (5);
- f) subjecting said preheated set [blank (5)-surface element (4)] to 3D shaping through compression, for example in a forming mould (10), so as to produce the support layer (2) with the surface element (4) integrated in it and with the slot, notch or cut-out opening (5') transformed into a throughway (2") sealed around a crossing portion (6) of the local extension (4") of the surface element (4);
- g) adding, during the previous compression phase f) or in a subsequent step, at least a top covering layer (3), so as to form the viewable or exposed face (1') of the trim part (1);
- h) separating the portion (6') of the local extension (4") extending beyond the opening of the throughway (2") on the rear face (2') of the support layer (2) and of the connecting site or area (4‴), from said rear face (2').

23. Process according to claim 21 or 22, **characterised in that** it consists in realising a through U-shaped cut (5') in the blank (5), when seen in the median plane of said blank, so as to provide a bendable tong (13) of mat or fleece material, the local extension (4") being preferably a flat cable or wire.

24. Process according to claim 23, **characterised in that** step ii) comprises providing a surface element (4) with a second portion (6') of the local extension (4") including all the conductive wires or stripes (17) and forming, at least partly over its length from its free end (6"), a rigid part (18), which is preferably tapered or pointy at said free end (6"), like a needle, and pushing said rigid (18) part through the blank (5) of mixed polypropylene fibres and natural fibres, so as to locate the second portion (6') on the other side of it.

25. Process according to claim 21, **characterised in that** step ii) comprises providing a surface element (4) wherein the wires or stripes (17) of the local extension (4") are mutually separate and consist of individualised wires or stripes (17), each of them having possibly a rigid structure (17') over at least part of its length from its free end and being preferably tapered or sharp at said free end, like needles, and pushing said rigid structures (17') through the blank (5) of mixed polypropylene fibres and natural fibres, so as to locate the second portion (6') of the local extension (4") on the other side of it.

26. Process according to claim 21, **characterised in that** step ii) comprises providing a surface element (4) wherein the wires or stripes (17) of the local extension (4") are mutually separate and consist of individualised wires or stripes (17), introducing said wires or stripes (17) into a hollow guiding element (18'), preferably tapered, such as a hollow needle, and pushing said guiding element (18') through the blank (5) of mixed polypropylene fibres and natural fibres, so as to locate the parts of the wires or stripes forming the second portion (6') of the local extension (4") on the other side of it, and then extracting said wires or stripes (17) from said guiding element (18') and removing the latter.

27. Process according to anyone of claims 21 to 26, **characterised in that**, before the thermocompression step, a protection element (11) is arranged on the rear side (2') of the blank (5), where the second portion (6') of the local extension (4") emerges from the blank (5), said protection element (11) forming a shielding layer between the local extension (4") of the surface element (4) and said rear side (2') and facilitating the separation of the protruding portion (6') of the local extension (4") and of the connecting site or area (4‴), from said rear face (2').

28. Process according to anyone of claims 21 to 27, **characterised in that** it also consists in providing another blank (12) of material made of a mixture of polypropylene fibres and natural fibres, made of polypropylene fibres or made of polyethylene fibres and arranging said second blank (12) on the first blank (5) equipped with said surface element (4) after step ii) of claim 21 or after step d) of claim 22, and then shaping together by thermo-compression said two associated blanks (5, 12) and said element (4) so as to produce a blank part in the shape of the intended trim part (1) and incorporating the support layer (2), the surface element (4) and an additional layer (7) corresponding to said thermo-compressed other blank (12) and covering at least the surface element (4).

29. Process according to anyone of claims 21 to 28, **characterised in that** a it comprises applying a top covering layer (3) which extends over a part of or the whole support layer (2), and covers at least the functional area(s) (4') of the at least one surface element (4), said top covering layer (3) consisting either in a protective coating, such as a paint or a transparent or translucid varnish, possibly incorporating additional decorative elements, such as for example pigments, particles or similar, or in a material decorative layer selected from the group comprising textile fabrics, nonwoven fleeces, PVC skins, TPO skins, PP films, leather skins and cork, wood or stone veneers.

30. Process according to claim 29, **characterised in that** a comfort layer (9) consisting of a foam layer is present on the back or rear side of the material decorative layer (3), opposed to the exposed face (1') of said trim part (1).

31. Process according to anyone of claims 21 to 30, **characterised in that** the arrangement of the thin functional surface element (4) on the blank (5) intended to form the support layer (2) is guided and locked in position by means of indexing elements when placed in the thermoforming mould (10).

## Patentansprüche

1. Mehrschichtiges selbsttragendes 3D-geformtes Verkleidungsteil (1) mit einer freiliegenden Fläche (1'), insbesondere ein Verkleidungsteil für ein Kraftfahrzeug, wie z. B. ein Innenabdeckungs- oder Auskleidungsteil, wobei das Verkleidungsteil (1) wenigstens eine darunterliegende strukturelle Tragschicht (2), wenigstens eine darüberliegende Deckschicht (3, 7), die auf der freiliegenden Fläche (1') des Verkleidungsteils (1) oder wenigstens einem Teil von ihr sichtbar ist oder diese bildet, und wenigstens ein dünnes Oberflächenelement (4) mit wenigstens einem Funktionsbereich (4'), das zwischen der der zuvor genannten Tragschicht (2) und Deckschicht (3, 7) angeordnet ist und sich über seine gesamte Oberfläche mit wenigstens der Tragschicht (2) in direktem Kontakt befindet, umfasst, wobei die Tragschicht (2) aus einer mit Fasern verstärkten thermokomprimierten Schicht eines thermoplastischen Materials besteht, wobei das wenigstens eine Funktions-Oberflächenelement (4) wenigstens einem Verbindungsmittel (4") zugeordnet ist, das sich durch die Tragschicht (2) erstreckt und auf der der freiliegenden Fläche (1') gegenüberliegenden Rückseite (2') der Tragschicht (2) eine Verbindungsstelle oder einen Verbindungsbereich (4‴) zur Verbindung mit einer elektrische Leistung abgebenden Quelle und/oder einer elektrischen/elektronischen Vorrichtung bereitstellt,
wobei das Verkleidungsteil (1) **dadurch gekennzeichnet ist, dass** die Tragschicht (2) durch 3D-Formen durch Thermokompression in eines Rohlings (5) aus gemischten Polypropylenfasern und Naturfasern erhalten wurde, dass das oder jedes Verbindungsmittel aus einer in das Funktions-Oberflächenelement (4) integrierten lokalen Erweiterung (4") besteht, welche die Tragschicht (2) an einem Durchgang (2") in dem ursprünglich nicht komprimierten Verbundmaterialrohling (5) der Tragschicht (2) durchquert, der einem Schlitz, einer Kerbe oder einer ausgeschnittenen Öffnung (5') entspricht, der bzw. die im ursprünglichen Verbundwerkstoffrohling (5) der Tragschicht (2) verwirklicht ist, der bzw. die während der Thermokompression versiegelt wird, und dass der Abschnitt (6) der lokalen Erweiterung (4"), der die Tragschicht (2) durchquert, sich direkt mit ihrem thermokomprimierten grundlegenden Material in Kontakt befindet und in dieses eingebettet ist.

2. Verkleidungsteil (1) nach Anspruch 1, **dadurch gekennzeichnet, dass** die oder jede lokale Erweiterung (4") aus einer einen oder mehrere leitfähige Drähte oder Streifen (17) umfassenden elektrischen Zuleitung besteht, mit einem ersten Abschnitt (6), der die Tragschicht (2) durchquert und in sie eingebettet ist, in direktem Kontakt mit ihrem grundlegenden Material, und mit einem zweiten Abschnitt (6'), der sich über die Öffnung des Durchgangs (2") auf der Rückseite (2') der Tragschicht (2) hinaus erstreckt und über wenigstens einen Teil seiner Länge mit einem Verbindungsbereich (4‴) oder, vorzugsweise an seinem freien Ende (6"), mit einer Verbindungsstelle (4‴), vorzugsweise in Form eines Verbinders, versehen ist.

3. Verkleidungsteil (1) nach Anspruch 1 oder 2, **dadurch gekennzeichnet, dass** wenigstens der zweite Abschnitt (6') der Zuleitung (4") und die zugeordnete Verbindungsstelle (4‴) eine flache Form aufweisen, wobei der zweite Abschnitt (6') vorzugsweise wenigstens teilweise flexibel ist und alle Drähte oder Streifen (17) enthält.

4. Verkleidungsteil (1) nach Anspruch 2, **dadurch gekennzeichnet, dass** der zweite Abschnitt (6') der Zuleitung (4") einschließlich aller leitfähigen Drähte oder Streifen (17) wenigstens teilweise über seine Länge von seinem freien Ende (6") einen starren Teil (18) umfasst oder bildet, der vorzugsweise an dem freien Ende (6" konisch oder spitz zulaufend ist.

5. Verkleidungsteil (1) nach Anspruch 2, **dadurch gekennzeichnet, dass** die leitfähigen Drähte oder Streifen (17) der lokalen Erweiterung (4") voneinander getrennt sind und aus einzelnen Drähten oder Streifen (17) bestehen, wobei jeder von ihnen über wenigstens einen Teil seiner Länge von seinem freien Ende eine starre Struktur (17') aufweisen kann und vorzugsweise an diesem freien Ende konisch zulaufend oder scharf ist.

6. Verkleidungsteil (1) nach einem der Ansprüche 1 bis 5, **dadurch gekennzeichnet, dass** das oder jedes Funktions-Oberflächenelement (4) in Folge angewendeter Wärme und ausgeübten Drucks mit der Substratschicht (2) stofflich verbunden oder verschweißt ist und wenigstens teilweise in die Dicke der Schicht (2), vorzugsweise in einer im Wesentlichen bündig angebrachten Weise, eingebettet sein kann.

7. Verkleidungsteil (1) nach einem der Ansprüche 1 bis 6, **dadurch gekennzeichnet, dass** das oder jedes dünne Funktions-Oberflächenelement (4) mit einer Trägermatrix oder Tragschicht (15), die mit dem Material der Tragschicht (2) kompatibel ist, zusammengefügt oder darin aufgenommen ist und dazu vorgesehen ist, wenigstens eine der Funktionen auszuführen, die aus der Gruppe ausgewählt sind, die Folgendes umfasst: Erwärmen, Beleuchten, Anzeigen von Bildern, Grafiken und/oder Text, Erfassen von Druck oder Kontakt, Erfassen wenigstens eines physikalischen Parameters seiner Umgebung, Empfangen und/oder Emittieren elektromagnetischer Wellen.

8. Verkleidungsteil (1) nach Anspruch 7, **dadurch gekennzeichnet, dass** das Funktions-Oberflächenelement (4) eine thermoplastische oder textile Trägermatrix (15) umfasst, welche wenigstens eine elektronische oder elektrische Komponente (15') trägt oder enthält, die dazu vorgesehen ist, die erwartete Funktion des Funktionselements (4) auszuführen, und vorzugsweise außerdem die leitfähigen Drähte oder Streifen (17) der lokalen Erweiterung (4') umfasst.

9. Verkleidungsteil (1) nach einem der Ansprüche 1 bis 8, **dadurch gekennzeichnet, dass** es eine spezifische Deckschicht (3) umfasst, die die obere Dekor- und/oder Schutzschicht des Verkleidungsteils (1) bildet und auf der freiliegenden Fläche (1') des Verkleidungsteils (1) sichtbar ist oder wenigstens einen Teil von ihr bildet, wobei die obere Schicht (3) entweder eine Schutzbeschichtung ist, wie z. B. eine Farbe oder ein transparenter oder durchsichtiger Lack, der zusätzliche Dekorelemente, wie z. B. Pigmente, Partikel oder Ähnliches enthalten kann, oder eine stoffliche Dekorschicht ist, die aus der Gruppe ausgewählt ist, die Textilgewebe, Vliese, PVC-Folien, TPO-Folien, PP-Filme, Leder und Kork-, Holz- oder Steinfurniere umfasst.

10. Verkleidungsteil (1) nach Anspruch 9, **dadurch gekennzeichnet, dass** auf der der freiliegenden Seite (1') des Verkleidungsteils (1) gegenüberliegenden hinteren oder Rückseite der Materialdekorschicht (3) eine aus einer Schaumstoffschicht bestehende Komfortschicht (9) vorhanden ist.

11. Verkleidungsteil (1) nach einem der Ansprüche 1 bis 10, **dadurch gekennzeichnet, dass** es wenigstens zwei Deckschichten umfasst, nämlich eine obere Deckschicht (3), die eine freiliegende Dekor- und/oder Schutzschicht des Verkleidungsteils (1) bildet, und wenigstens eine zusätzliche Zwischenschicht (7), die sich zwischen der Tragschicht (2) und der oberen Deckschicht (3) befindet und die wenigstens den (die) Funktionsbereich(e) (4') des wenigstens einen Oberflächenelements (4) abdeckt, während sie ihn (sie) von der Dekorschicht (3) abschirmt.

12. Verkleidungsteil (1) nach Anspruch 11, **dadurch gekennzeichnet, dass** sich die wenigstens eine zusätzliche Zwischenschicht (7) in direktem Kontakt mit dem (den) Funktionsbereich(en) (4') des wenigstens einen Oberflächenelements (4) und mit der Tragschicht (2) außerhalb oder jenseits des Funktionsbereichs (der Funktionsbereiche) (4') des wenigstens einen Oberflächenelements (4) befindet und mit diesem (diesen) verbunden ist und außerdem wenigstens den Bereich des Durchgangs (2"), vorzugsweise die gesamte Tragschicht (2), abdeckt.

13. Verkleidungsteil (1) nach einem der Ansprüche 1 bis 8, **dadurch gekennzeichnet, dass** die freiliegende Fläche (1') des Verkleidungsteils (1) ganz oder teilweise durch eine zusätzliche Schicht (7) ausgebildet ist, die die obere Deckschicht bildet, wobei ein komplementärer Teil der freiliegenden Fläche (1') möglicherweise durch die Substratschicht (2) ausgebildet ist, wobei die zusätzliche Schicht (7) wenigstens den (die) Funktionsbereich(e) (4') des wenigstens einen Oberflächenelements (4) und die Tragschicht (2) außerhalb oder jenseits des Funktionsbereichs (der Funktionsbereiche) (4') des wenigstens einen Oberflächenelements (4) abdeckt und sich mit diesen in direktem Kontakt befindet und verbunden ist und außerdem den Bereich des Durchgangs (2"), vorzugsweise die gesamte Tragschicht (2), abdeckt.

14. Verkleidungsteil (1) nach einem der Ansprüche 11 bis 13, **dadurch gekennzeichnet, dass** die Zwischen- oder Zusatzschicht (7) außerdem aus einer thermokomprimierten Schicht eines thermoplastischen Materials besteht, die mit Fasern verstärkt sein kann, und mit der Substratschicht (2) in Folge angewendeter Wärme und ausgeübten Drucks stofflich verbunden oder verschweißt ist, wobei ihr grundlegendes thermoplastisches Material wenigstens mit dem thermoplastischen Material der Tragschicht (2) kompatibel, wenn nicht völlig gleich ist.

15. Verkleidungsteil (1) nach einem der Ansprüche 1 bis 12, **dadurch gekennzeichnet, dass** die Dekorschicht (3), die mit einer Komfortschicht (9) auf ihrer hinteren oder Rückseite verbunden sein kann, wenigstens teilweise, vorzugsweise im Wesentlichen vollständig, die Tragschicht (2) und in jedem Fall entweder den (die) Funktionsbereich(e) (4') des wenigstens einen Oberflächenelements (4) oder eine zusätzliche Zwischenschicht (7) abdeckt.

16. Verkleidungsteil (1) nach einem der Ansprüche 1 bis 12 und 15, **dadurch gekennzeichnet, dass** die Dekor-Deckschicht (3) mit der Tragschicht (2) und dem (den) Funktionsbereich(en) (4') des dünnen Oberflächenelements (4) oder mit einer zusätzlichen Zwischenschicht (7) entweder direkt als eine durch Druck aufgebrachte oder umspritzte Schicht oder mittels eines Klebstoffs oder eines Leims zusammengefügt ist.

17. Verkleidungsteil (1) nach einem der Ansprüche 1 bis 16, **dadurch gekennzeichnet, dass** das Material der Tragschicht (2) aus einer Polypropylenmatrix (PP) besteht, die Naturfasern (NF) als Verstärkungsfasern mit einem Gewichtsprozentsatz PP/NF umfasst, der zwischen 65 %/35 % und 40 %/60 %, vorzugsweise zwischen 60 %/40 % und 50 %/50 % liegt, und dass die Tragschicht (2) ein Flächengewicht zwischen 1400 g/m2 und 2200 g/m2, vorzugsweise zwischen 1600 g/m2 und 2000 g/m2 und eine Dicke zwischen 1,4 mm und 3,0 mm, vorzugsweise zwischen 1,8 mm und 2,5 mm aufweist.

18. Verkleidungsteil (1) nach einem der Ansprüche 1 bis 17, **dadurch gekennzeichnet, dass** das Material der eine zusätzliche oder Zwischenschicht bildenden Deckschicht (7) aus einer Polypropylenmatrix (PP) besteht, die Naturfasern (NF) als Verstärkungsfasern mit einem Gewichtsprozentsatz PP/NF umfasst, der zwischen 65 %/35 % und 40 %/60 %, vorzugsweise zwischen 60 %/40 % und 50 %/50 % liegt, und dass die Deckschicht (7) ein Flächengewicht zwischen 100 g/m2 und 500 g/m2, vorzugsweise zwischen 200 g/m2 und 400 g/m2 und eine Dicke zwischen 0,1 mm und 1,0 mm, vorzugsweise zwischen 0,4 mm und 0,7 mm aufweist.

19. Verkleidungsteil (1) nach einem der Ansprüche 1 bis 17, **dadurch gekennzeichnet, dass** die eine zusätzliche oder Zwischenschicht bildende Deckschicht (7) vollständig aus Polypropylen (PP) oder Polyethylen (PE), Polyethylenterephthalat (PET) oder koextrudiertem Zweikomponenten-PET besteht und dass die Deckschicht (7) ein Flächengewicht zwischen 100 g/m2 und 500 g/m2, vorzugsweise zwischen 200 g/m2 und 400 g/m2 und eine Dicke zwischen 0,1 mm und 1,0 mm, vorzugsweise zwischen 0,4 mm und 0,7 mm aufweist.

20. Verkleidungsteil (1) nach einem der Ansprüche 1 bis 19, **dadurch gekennzeichnet, dass** die Verstärkungsfasern Naturfasern, wie z. B. Flachs-, Sisal-, Jute-, Hanf- oder Kenaf-Fasern, thermoplastische Fasern, Glasfasern, Kohlenstofffasern oder Mischungen von wenigstens zwei verschiedenen Typen derartiger Fasern sind.

21. Verfahren zum Herstellen eines mehrschichtigen selbsttragenden 3D-geformten Verkleidungsteils (1) nach einem der Ansprüche 1 bis 20, das wenigstens ein dünnes Funktions-Oberflächenelement (4) umfasst, wobei das Verfahren im Wesentlichen umfasst:
- i) Versehen eines Rohlings (5) mit einem Durchgang (2"), der einem Schlitz, einer Kerbe oder einer ausgeschnittenen Öffnung (5') entspricht, der in dem ursprünglichen Verbundmaterialrohling (5) der Tragschicht (2) verwirklicht ist;
- ii) Anbringen eines dünnen Funktions-Oberflächenelements (4) auf einer Seite des Rohlings (5) mit einer lokalen Erweiterung (4") des Elements (4), die sich durch die ausgeschnittene Öffnung (5') des Rohlings (5) auf dessen andere Seite erstreckt;
- iii) 3D-Formen des mit dem Element (4) versehenen Rohlings (5) durch Thermokompression in eine Tragschicht (2), die das Oberflächenelement (4) enthält, wobei die geformte Tragschicht (2) im Wesentlichen die für das Verkleidungsteil (1) vorgesehene Form aufweist;
- iiii) Hinzufügen wenigstens einer oberen Deckschicht (3, 7), die vorgesehen ist, wenigstens teilweise die sichtbare oder freiliegende Fläche (1') des Verkleidungsteils (1) zu bilden, und möglicherweise wenigstens einer Zwischenschicht,
wobei das Verfahren **dadurch gekennzeichnet ist,**
**dass** der Rohling (5) ein Rohling aus gemischten Polypropylenfasern und Naturfasern ist und
**dass** der Abschnitt (6) der lokalen Erweiterung (4") die Tragschicht (2) durchquert und folglich sich direkt mit ihrem grundlegenden Material in Kontakt befindet und in dieses eingebettet ist, während der Durchgang (2") während der Thermokompression verschlossen wird.

22. Verfahren nach Anspruch 21, **dadurch gekennzeichnet, dass** es die folgenden aufeinanderfolgenden Arbeitsschritte umfasst:
- a) Bereitstellen einer Matte oder eines Vlieses aus gemischten Polypropylenfasern und Naturfasern, die vorzugsweise vernadelt und/oder einer chemischen Faserbindungsbehandlung unterzogen worden sind, und Schneiden eines Rohlings (5) des Materials, der eine Größe aufweist, die an die Größe des Verkleidungsteils (1) angepasst ist;
- b) Herstellen eines durchgehenden Schlitzes, einer durchgehenden Kerbe oder einer durchgehenden ausgeschnittenen Öffnung (5') in dem Rohling (5);
- c) Bereitstellen eines flexiblen und dünnen Funktions-Oberflächenelements (4);
- d) Anordnen und möglicherweise Befestigen, z. B. durch Schweißen, Nähen oder Kleben, des dünnen Funktions-Oberflächenelements (4) an dem Rohling (5) und Schieben der lokalen Erweiterung (4") des Elements (4) durch den Schlitz, die Kerbe oder die ausgeschnittene Öffnung (5'), so dass sich wenigstens seine Verbindungsstelle oder sein Verbindungsbereich (4‴), vorzugsweise zusammen mit einem Abschnitt (6') der lokalen Erweiterung (4"), auf der anderen Seite des Rohlings (5) befindet;
- e) Unterwerfen des mit dem Oberflächenelement (4) versehenen Rohlings (5) einem Erwärmen, möglicherweise mit Kontakt unter Druck, so dass die Polypropylenfasern des Rohlings (5) sich selbst in einem gegebenen Zustand einer Klebrigkeit und Plastizität vorfinden und dass das Oberflächenelement (4) befestigt und möglicherweise wenigstens teilweise in den Rohling (5) integriert wird;
- f) Unterwerfen des vorgewärmten Satzes [Rohling (5)-Oberflächenelement (4)] einer 3D-Formgebung durch Kompression, z. B. in einer Formgebungs-Form (10), um die Tragschicht (2) mit dem darin integrierten Oberflächenelement (4) und mit dem Schlitz, der Kerbe oder der ausgeschnittenen Öffnung (5'), der bzw. die in einen Durchgang (2") umgewandelt wird, der um einen durchquerenden Abschnitt (6) der lokalen Erweiterung (4") des Oberflächenelements (4) versiegelt wird, herzustellen;
- g) Hinzufügen, während der vorhergehenden Kompressionsphase f) oder in einem nachfolgenden Schritt, wenigstens einer oberen Deckschicht (3), um die sichtbare oder freiliegende Fläche (1') des Verkleidungsteils (1) zu bilden;
- h) Trennen des Abschnitts (6') der lokalen Erweiterung (4"), der sich über die Öffnung des Durchgangs (2") auf der Rückseite (2') der Tragschicht (2) und die Verbindungsstelle oder den Verbindungsbereich (4‴) hinaus erstreckt, von der Rückseite (2').

23. Verfahren nach Anspruch 21 oder 22, **dadurch gekennzeichnet, dass** es aus dem Verwirklichen eines durchgehenden U-förmigen Schnitts (5') in dem Rohling (5), wenn in der Mittelebene des Rohlings gesehen, um eine biegsame Zange (13) aus Matten- oder Vliesmaterial bereitzustellen, besteht, wobei die lokale Erweiterung (4") vorzugsweise ein flaches Kabel oder ein Draht ist.

24. Verfahren nach Anspruch 23, **dadurch gekennzeichnet, dass** der Schritt ii) Bereitstellen eines Oberflächenelements (4) mit einem zweiten Abschnitt (6') der lokalen Erweiterung (4"), der alle leitfähigen Drähte oder Streifen (17) enthält, und Bilden, wenigstens teilweise über seine Länge von seinem freien Ende (6"), eines starren Teils (18), das vorzugsweise an dem freien Ende (6") wie eine Nadel konisch oder spitz zulaufend ist, und Schieben des starren (18) Teils durch den Rohling (5) aus gemischten Polypropylenfasern und Naturfasern, um den zweiten Abschnitt (6') auf dessen anderer Seite zu positionieren, umfasst.

25. Verfahren nach Anspruch 21, **dadurch gekennzeichnet, dass** der Schritt ii) Bereitstellen eines Oberflächenelements (4) umfasst, wobei die Drähte oder Streifen (17) der lokalen Erweiterung (4") wechselseitig getrennt sind und aus individualisierten Drähten oder Streifen (17) bestehen, wobei jeder von ihnen möglicherweise eine starre Struktur (17') über wenigstens einen Teil seiner Länge von seinem freien Ende aufweist und vorzugsweise an dem freien Ende wie Nadeln konisch zulaufend oder scharf ist, und Schieben der starren Strukturen (17') durch den Rohling (5) aus gemischten Polypropylenfasern und Naturfasern, um den zweiten Abschnitt (6') der lokalen Erweiterung (4") auf dessen anderer Seite zu positionieren, umfasst.

26. Verfahren nach Anspruch 21, **dadurch gekennzeichnet, dass** der Schritt ii) Bereitstellen eines Oberflächenelements (4), wobei die Drähte oder Streifen (17) der lokalen Erweiterung (4") wechselseitig getrennt sind und aus individualisierten Drähten oder Streifen (17) bestehen, Einführen der Drähte oder Streifen (17) in ein hohles Führungselement (18'), das vorzugsweise konisch zulaufend ist, wie z. B. eine Hohlnadel, und Schieben des Führungselements (18') durch den Rohling (5) aus gemischten Polypropylenfasern und Naturfasern, um die Teile der Drähte oder Streifen, die den zweiten Abschnitt (6') der lokalen Erweiterung (4") bilden, auf dessen anderer Seite zu positionieren, und dann Herausziehen der Drähte oder Streifen (17) aus dem Führungselement (18') und Entfernen des letzteren umfasst.

27. Verfahren nach einem der Ansprüche 21 bis 26, **dadurch gekennzeichnet, dass** vor dem Thermokompressionsschritt ein Schutzelement (11) auf der Rückseite (2') des Rohlings (5) angeordnet wird, wo der zweite Abschnitt (6') der lokalen Erweiterung (4") aus dem Rohling (5) austritt, wobei das Schutzelement (11) eine Abschirmschicht zwischen der lokalen Erweiterung (4") des Oberflächenelements (4) und der Rückseite (2') bildet und die Trennung des vorstehenden Abschnitts (6') der lokalen Erweiterung (4'') und der Verbindungsstelle oder des Verbindungsbereichs (4‴) von der Rückseite (2') erleichtert.

28. Verfahren nach einem der Ansprüche 21 bis 27, **dadurch gekennzeichnet, dass** es außerdem im Bereitstellen eines weiteren Rohlings (12) aus einem Material, das aus einer Mischung aus Polypropylenfasern und Naturfasern besteht, aus Polypropylenfasern besteht oder aus Polyethylenfasern besteht, und Anordnen des zweiten Rohlings (12) auf dem ersten Rohling (5), der mit dem Oberflächenelement (4) ausgestattet ist, nach dem Schritt ii) des Anspruchs 21 oder nach dem Schritt d) des Anspruchs 22, und dann gemeinsamen Formen der beiden zugeordneten Rohlinge (5, 12) und des Elements (4) durch Thermokompression, um einen Rohlingsteil in der Form des vorgesehenen Verkleidungsteils (1) herzustellen, und Aufnehmen der Tragschicht (2), des Oberflächenelements (4) und einer zusätzlichen Schicht (7), die dem thermokomprimierten anderen Rohling (12) entspricht und wenigstens das Oberflächenelement (4) abdeckt, besteht.

29. Verfahren nach einem der Ansprüche 21 bis 28, **dadurch gekennzeichnet, dass** es das Aufbringen einer oberen Deckschicht (3) umfasst, die sich über einen Teil oder die gesamte Tragschicht (2) erstreckt und wenigstens den (die) Funktionsbereich(e) (4') des wenigstens einen Oberflächenelements (4) abdeckt, wobei die obere Deckschicht (3) entweder aus einer Schutzbeschichtung, wie z. B. einer Farbe oder einem transparenten oder durchsichtigen Lack, die möglicherweise zusätzliche Dekorelemente, wie z. B. Pigmente, Partikel oder Ähnliches, enthält, oder aus einer stofflichen Dekorschicht, die aus der Gruppe ausgewählt ist, die Textilgewebe, Vliese, PVC-Folien, TPO-Folien, PP-Filme, Leder und Kork-, Holz- oder Steinfurniere umfasst, besteht.

30. Verfahren nach Anspruch 29, **dadurch gekennzeichnet, dass** eine aus einer Schaumstoffschicht bestehende Komfortschicht (9) auf der hinteren oder Rückseite der stofflichen Dekorschicht (3) vorhanden ist, die der freiliegenden Fläche (1') des Verkleidungsteils (1) gegenüberliegt.

31. Verfahren nach einem der Ansprüche 21 bis 30, **dadurch gekennzeichnet, dass** die Anordnung des dünnen Funktions-Oberflächenelements (4) auf dem Rohling (5), der vorgesehen ist, die Tragschicht (2) zu bilden, mittels Indexierungselementen geführt und an der Stelle verriegelt wird, wenn sie in der Thermoformungs-Form (10) angeordnet wird.

## Revendications

1. Pièce de garniture en 3D autoportante multicouche (1) ayant une face exposée (1'), en particulier une pièce de garniture pour un véhicule automobile, comme par exemple une pièce de revêtement ou d'habillage intérieur, ladite pièce de garniture (1) comprenant au moins une couche de support structurale sous-jacente (2), au moins une couche de revêtement sus-jacente (3, 7) visible sur ou formant la face exposée (1') de la pièce de garniture (1), ou au moins une partie de celle-ci, et au moins un élément de surface mince (4) avec au moins une zone fonctionnelle (4'), situé entre lesdites couches de support (2) et de revêtement (3, 7) et en contact direct sur toute sa surface avec au moins la couche de support (2), dans laquelle ladite couche de support (2) est constituée d'une couche de matériau thermoplastique thermocomprimé renforcée par des fibres, ledit au moins un élément fonctionnel de surface (4) est associé à au moins un moyen de connexion (4") s'étendant à travers la couche de support (2) et fournissant sur la face arrière (2') de ladite couche de support (2), opposée à la face exposée (1'), un site ou une zone de connexion (4‴) pour la connexion avec une source de fourniture d'énergie électrique et/ou un dispositif électrique/électronique,
ladite pièce de garniture (1) étant **caractérisée en ce que** ladite couche de support (2) a été obtenue par façonnage 3D par thermocompression d'une ébauche (5) d'un mélange de fibres en polypropylène et de fibres naturelles, **en ce que** le ou chaque moyen de connexion est constitué d'une extension locale intégrale (4") de l'élément fonctionnel de surface (4) qui traverse la couche de support (2) au niveau d'un passage (2") dans l'ébauche originale en matériau composite non compressé (5) de ladite couche de support (2), correspondant à une fente, une encoche ou une ouverture découpée (5') réalisée dans l'ébauche originale en matériau composite (5) de ladite couche de support (2), qui est scellée pendant la thermocompression, et **en ce que** la partie (6) de l'extension locale (4") traversant ladite couche de support (2) est directement en contact avec son matériau constitutif thermocomprimé et s'y incorpore.

2. Pièce de garniture (1) selon la revendication 1, **caractérisée en ce que** la ou chaque extension locale (4") est constituée d'une ligne d'alimentation électrique, comprenant un ou plusieurs fils ou bandes conducteurs (17), avec une première partie (6) traversant la couche de support (2) et incorporée dans celle-ci, en contact direct avec son matériau constitutif, et avec une seconde partie (6') s'étendant au-delà de l'ouverture du passage (2") sur la face arrière (2') de la couche de support (2) et pourvue sur au moins une partie de sa longueur d'une zone de connexion (4‴) ou, de préférence à son extrémité libre (6"), d'un site de connexion (4‴), avantageusement sous la forme d'un connecteur.

3. Pièce de garniture (1) selon la revendication 1 ou 2, **caractérisée en ce qu'**au moins la seconde partie (6') de la ligne d'alimentation (4") et le site de connexion (4‴) associé ont une forme plate, ladite seconde partie (6') étant de préférence au moins partiellement flexible et incluant tous les fils ou bandes (17).

4. Pièce de garniture (1) selon la revendication 2, **caractérisée en ce que** la seconde partie (6') de la ligne d'alimentation (4") incluant tous les fils ou bandes conducteurs (17) comprend ou forme, au moins en partie sur sa longueur à partir de son extrémité libre (6"), une partie rigide (18), qui est de préférence effilée ou pointue à ladite extrémité libre (6").

5. Pièce de garniture (1) selon la revendication 2, **caractérisée en ce que** les fils ou bandes conducteurs (17) de l'extension locale (4") sont mutuellement séparés et sont constitués de fils ou bandes individualisés (17), chacun d'entre eux ayant éventuellement une structure rigide (17') sur au moins une partie de sa longueur à partir de son extrémité libre et étant de préférence effilé ou pointu à ladite extrémité libre.

6. Pièce de garniture (1) selon l'une quelconque des revendications 1 à 5, **caractérisée en ce que** le ou chaque élément fonctionnel de surface (4) est lié ou soudé par matériau à la couche de substrat (2), sous l'effet de la chaleur et de la pression appliquées, et est éventuellement incorporé au moins partiellement dans l'épaisseur de ladite couche (2), de préférence d'une manière sensiblement affleurante.

7. Pièce de garniture (1) selon l'une quelconque des revendications 1 à 6, **caractérisée en ce que** le ou chaque élément fonctionnel de surface mince (4) est assemblé ou incorporé dans une matrice ou couche de support (15) compatible avec le matériau de la couche de support (2) et est conçu pour exécuter au moins l'une des fonctions sélectionnées dans le groupe comprenant : le chauffage, l'éclairage, l'affichage d'images, de graphiques et/ou de textes, la détection de pression ou de contact, la détection d'au moins un paramètre physique de son environnement, la réception et/ou l'émission d'ondes électromagnétiques.

8. Pièce de garniture (1) selon la revendication 7, **caractérisée en ce que** l'élément fonctionnel de surface (4) comprend une matrice de support thermoplastique ou textile (15) portant ou incorporant au moins un composant électronique ou électrique (15') conçu pour remplir la fonction attendue dudit élément fonctionnel (4), et de préférence aussi les fils ou bandes conducteurs (17) de l'extension locale (4').

9. Pièce de garniture (1) selon l'une quelconque des revendications 1 à 8, **caractérisée en ce qu'**elle comprend une couche de revêtement spécifique (3) qui constitue la couche décorative et/ou protectrice supérieure de la pièce de garniture (1) et est visible sur, ou forme au moins une partie de, la face exposée (1') de ladite pièce de garniture (1), ladite couche supérieure (3) étant soit un revêtement protecteur, telle qu'une peinture ou un vernis transparent ou translucide, incorporant éventuellement des éléments décoratifs supplémentaires, tels que par exemple des pigments, des particules ou similaires, soit une couche décorative matérielle choisie dans le groupe comprenant les tissus textiles, les non-tissés, les peaux en PVC, les peaux en TPO, les films en PP, les peaux en cuir et les placages en liège, en bois ou en pierre.

10. Pièce de garniture (1) selon la revendication 9, **caractérisée en ce qu'**une couche de confort (9) constituée d'une couche de mousse est présente au dos ou à l'arrière de la couche décorative matérielle (3), opposée à la face exposée (1') de ladite pièce de garniture (1).

11. Pièce de garniture (1) selon l'une quelconque des revendications 1 à 10, **caractérisée en ce qu'**elle comprend au moins deux couches de revêtement, à savoir une couche de revêtement supérieure (3) formant une couche décorative et/ou protectrice exposée de ladite pièce de garniture (1) et au moins une couche intermédiaire supplémentaire (7) située entre la couche de support (2) et ladite couche de revêtement supérieure (3) et qui recouvre au moins la ou les zones fonctionnelles (4') de l'au moins un élément de surface (4) tout en le protégeant de la couche décorative (3).

12. Pièce de garniture (1) selon la revendication 11, **caractérisée en ce que** ladite au moins une couche intermédiaire supplémentaire (7) est en contact direct et jointe à la ou aux zones fonctionnelles (4') de l'au moins un élément de surface (4) et à la couche de support (2), à l'extérieur ou au-delà de ladite ou desdites zones fonctionnelles (4') de l'au moins un élément de surface (4), et recouvre également au moins la zone du passage (2"), de préférence l'ensemble de la couche de support (2).

13. Pièce de garniture (1) selon l'une quelconque des revendications 1 à 8, **caractérisée en ce que** la face exposée (1') de la pièce de garniture (1) est partiellement ou totalement formée par une couche supplémentaire (7) qui constitue la couche de revêtement supérieure, une partie complémentaire de la face exposée (1') étant éventuellement formée par la couche de substrat (2), ladite couche supplémentaire (7) couvrant au moins et étant en contact direct et en liaison avec la ou les zones fonctionnelles (4') de l'au moins un élément de surface (4) et avec la couche de support (2), à l'extérieur ou au-delà de ladite ou desdites zones fonctionnelles (4') de l'au moins un élément de surface (4), et couvrant également la zone du passage (2"), de préférence la totalité de la couche de support (2).

14. Pièce de garniture (1) selon l'une quelconque des revendications 11 à 13, **caractérisée en ce que** la couche intermédiaire ou supplémentaire (7) est également constituée d'une couche de matériau thermoplastique thermocomprimé, éventuellement renforcée par des fibres, et est liée ou soudée à la couche de support (2), sous l'effet de la chaleur et de la pression appliquées, son matériau thermoplastique constitutif étant au moins compatible, ou même identique, avec le matériau thermoplastique de ladite couche de support (2).

15. Pièce de garniture (1) selon l'une quelconque des revendications 1 à 12, **caractérisée en ce que** la couche décorative (3), éventuellement associée à une couche de confort (9) sur sa face arrière ou dorsale, recouvre au moins partiellement, de préférence sensiblement entièrement, la couche de support (2), et en tout cas soit la ou les zones fonctionnelles (4') de l'au moins un élément de surface (4), soit une couche intermédiaire supplémentaire (7).

16. Pièce de garniture (1) selon l'une quelconque des revendications 1 à 12 et 15, **caractérisée en ce que** la couche de revêtement décorative (3) est assemblée à la couche de support (2) et à la ou aux zones fonctionnelles (4') de l'élément de surface mince (4) ou à une couche intermédiaire supplémentaire (7), soit directement en tant que couche appliquée par pression ou surmoulée, soit à l'aide d'un adhésif ou d'une colle.

17. Pièce de garniture (1) selon l'une quelconque des revendications 1 à 16, **caractérisée en ce que** le matériau de la couche de support (2) est composé d'une matrice de polypropylène (PP) incorporant des fibres naturelles (NF) comme fibres de renforcement avec un pourcentage en poids PP/NF compris entre 65%/35% et 40%/60%, de préférence entre 60%/40% et 50%/50%, et **en ce que** ladite couche de support (2) présente un poids surfacique compris entre 1400g/m² et 2200g/m², de préférence entre 1600g/m² et 2000g/m² et une épaisseur comprise entre 1,4 mm et 3,0 mm, de préférence entre 1,8 mm et 2,5 mm.

18. Pièce de garniture (1) selon l'une quelconque des revendications 1 à 17, **caractérisée en ce que** le matériau de la couche de revêtement (7) formant une couche supplémentaire ou intermédiaire est composé d'une matrice de polypropylène (PP) incorporant des fibres naturelles (NF) comme fibres de renforcement avec un pourcentage en poids PP/NF compris entre 65%/35% et 40%/60%, de préférence entre 60%/40% et 50%/50%, et **en ce que** ladite couche de revêtement (7) présente un poids surfacique compris entre 100g/m² et 500g/m², de préférence entre 200g/m² et 400g/m² et une épaisseur comprise entre 0,1 mm et 1,0 mm, de préférence entre 0,4 mm et 0,7 mm.

19. Pièce de garniture (1) selon l'une quelconque des revendications 1 à 17, **caractérisée en ce que** la couche de revêtement (7) formant une couche supplémentaire ou intermédiaire est entièrement réalisée en polypropylène (PP) ou en polyéthylène (PE), en polyéthylène téréphtalate (PET) ou en PET bicomposant coextrudé, et **en ce que** ladite couche de revêtement (7) présente un poids surfacique compris entre 100g/m² et 500g/m², de préférence entre 200g/m² et 400g/m² et une épaisseur comprise entre 0,1 mm et 1,0 mm, de préférence entre 0,4 mm et 0,7 mm.

20. Pièce de garniture (1) selon l'une quelconque des revendications 1 à 19, **caractérisée en ce que** les fibres de renforcement sont des fibres naturelles, telles que par exemple des fibres de lin, de sisal, de jute, de chanvre ou de kénaf, des fibres thermoplastiques, des fibres de verre, des fibres de carbone ou des mélanges d'au moins deux types différents de ces fibres.

21. Procédé de fabrication d'une pièce de garniture en 3D autoportante multicouche (1) selon l'une quelconque des revendications 1 à 20, comprenant au moins un élément fonctionnel de surface mince (4), ledit procédé consistant principalement à :
- i) fournir une ébauche (5) avec un passage (2") correspondant à une fente, une encoche ou une ouverture découpée (5') réalisée dans l'ébauche originale en matériau composite (5) de ladite couche de support (2) ;
- ii) monter un élément fonctionnel de surface mince (4) sur un côté de ladite ébauche (5) avec une extension locale (4") dudit élément (4) s'étendant à travers ladite ouverture découpée (5') de l'ébauche (5) sur l'autre côté de celle-ci ;
- iii) façonner en 3D par thermocompression ladite ébauche (5) équipée dudit élément (4) en une couche de support (2) incorporant ledit élément de surface (4), ladite couche de support (2) façonnée présentant sensiblement la forme prévue pour la pièce de garniture (1) ;
- iiii) ajouter au moins une couche de revêtement supérieure (3, 7) destinée à former au moins partiellement la face visible ou exposée (1') de la pièce de garniture (1), et éventuellement au moins une couche intermédiaire,
ledit procédé étant **caractérisé**
**en ce que** ladite ébauche (5) est une ébauche constituée d'un mélange de fibres en polypropylène et de fibres naturelles et
**en ce que** la partie (6) de l'extension locale (4") traverse ladite couche de support (2) et est donc directement en contact avec son matériau constitutif et y est incorporée, étant donné que le passage (2") est scellé pendant la thermocompression.

22. Procédé selon la revendication 21, **caractérisé en ce qu'**il comprend plus précisément les étapes opérationnelles successives suivantes :
- a) la fourniture d'un mat ou d'un non-tissé en mélange de fibres en polypropylène et de fibres naturelles, qui ont été de préférence aiguilletées et/ou soumises à un traitement chimique de liaison des fibres, et la découpe d'une ébauche (5) de ce matériau ayant une dimension adaptée à la taille de la pièce de garniture (1) ;
- b) la réalisation d'une fente, d'une encoche ou d'une ouverture découpée (5') dans ladite ébauche (5) ;
- c) la fourniture d'un élément fonctionnel de surface souple et mince (4) ;
- d) la disposition et éventuellement la fixation, par exemple par soudage, couture ou collage, dudit élément fonctionnel de surface mince (4) sur ladite ébauche (5) et la poussée de l'extension locale (4") dudit élément (4) à travers ladite fente, encoche ou ouverture découpée (5') de sorte qu'au moins son site ou sa zone de connexion (4‴), de préférence avec une partie (6') de l'extension locale (4"), se trouve de l'autre côté de l'ébauche (5) ;
- e) la soumission de ladite ébauche (5) équipée dudit élément de surface (4) à un chauffage, éventuellement avec contact sous pression, de sorte que les fibres en polypropylène de l'ébauche (5) se trouvent dans un état donné d'adhésivité et de plasticité et que l'élément de surface (4) se fixe et éventuellement s'intègre au moins partiellement dans l'ébauche (5) ;
- f) la soumission dudit ensemble préchauffé [ébauche (5)-élément de surface (4)] à une mise en forme 3D par compression, par exemple dans un moule de formage (10), de manière à produire la couche de support (2) en y incorporant l'élément de surface (4) et en transformant la fente, l'encoche ou l'ouverture découpée (5') en un passage (2") scellé autour d'une partie transversale (6) de l'extension locale (4") de l'élément de surface (4) ;
- g) l'ajout, au cours de la phase de compression précédente f) ou dans une étape ultérieure, d'au moins une couche de revêtement supérieure (3), de manière à former la face visible ou exposée (1') de la pièce de garniture (1) ;
- h) la séparation de la partie (6') de l'extension locale (4") s'étendant au-delà de l'ouverture du passage (2") sur la face arrière (2') de la couche de support (2) et du site ou de la zone de connexion (4‴), de ladite face arrière (2').

23. Procédé selon la revendication 21 ou 22, **caractérisé en ce qu'**il consiste à réaliser une découpe traversante en U (5') dans l'ébauche (5), vue dans le plan médian de ladite ébauche, de façon à fournir une pince pliable (13) en matériau de mat ou de non-tissé, l'extension locale (4") étant de préférence un câble ou un fil plat.

24. Procédé selon la revendication 23, **caractérisé en ce que** l'étape ii) comprend la fourniture à un élément de surface (4) d'une seconde partie (6') de l'extension locale (4") incluant tous les fils ou bandes conducteurs (17) et le formage, au moins en partie sur sa longueur à partir de son extrémité libre (6"), d'une partie rigide (18), qui est de préférence effilée ou pointue à ladite extrémité libre (6"), comme une aiguille, et la poussée de ladite partie rigide (18) à travers l'ébauche (5) en mélange de fibres en polypropylène et de fibres naturelles, de manière à placer la seconde partie (6') de l'autre côté de celle-ci.

25. Procédé selon la revendication 21, **caractérisé en ce que** l'étape ii) comprend la fourniture d'un élément de surface (4) dans lequel les fils ou les bandes (17) de l'extension locale (4") sont mutuellement séparés et sont constitués de fils ou de bandes individualisés (17), chacun d'entre eux ayant éventuellement une structure rigide (17') sur au moins une partie de sa longueur à partir de son extrémité libre et étant de préférence effilée ou pointue à ladite extrémité libre, comme des aiguilles, et la poussée desdites structures rigides (17') à travers l'ébauche (5) en mélange de fibres en polypropylène et de fibres naturelles, de manière à placer la seconde partie (6') de l'extension locale (4") de l'autre côté de celle-ci.

26. Procédé selon la revendication 21, **caractérisé en ce que** l'étape ii) comprend la fourniture d'un élément de surface (4) dans lequel les fils ou les bandes (17) de l'extension locale (4") sont mutuellement séparés et sont constitués de fils ou de bandes individualisés (17), l'introduction desdits fils ou bandes (17) dans un élément de guidage creux (18'), de préférence conique, tel qu'une aiguille creuse, et la poussée dudit élément de guidage (18') à travers l'ébauche (5) en mélange de fibres en polypropylène et de fibres naturelles, de manière à placer les parties des fils ou des bandes formant la seconde partie (6') de l'extension locale (4") de l'autre côté de celle-ci, puis l'extraction desdits fils ou bandes (17) dudit élément de guidage (18') et l'élimination de ce dernier.

27. Procédé selon l'une quelconque des revendications 21 à 26, **caractérisé en ce que**, avant l'étape de thermocompression, un élément de protection (11) est disposé sur la face arrière (2') de l'ébauche (5), dans lequel la seconde partie (6') de l'extension locale (4") émerge de l'ébauche (5), ledit élément de protection (11) forme une couche de protection entre l'extension locale (4") de l'élément de surface (4) et ladite face arrière (2') et la facilitation de la séparation de la partie saillante (6') de l'extension locale (4") et du site ou de la zone de connexion (4"'), de ladite face arrière (2').

28. Procédé selon l'une quelconque des revendications 21 à 27, **caractérisé en ce qu'**il comprend également la fourniture d'une autre ébauche (12) en matériau constitué d'un mélange de fibres en polypropylène et de fibres naturelles, en fibres en polypropylène ou en fibres de polyéthylène et la disposition de ladite seconde ébauche (12) sur la première ébauche (5) équipée dudit élément de surface (4) après l'étape ii) de la revendication 21 ou après l'étape d) de la revendication 22, puis la mise en forme par thermocompression desdites deux ébauches associées (5, 12) et dudit élément (4) de manière à produire une pièce brute ayant la forme de la pièce de garniture (1) prévue et l'incorporation de la couche de support (2), de l'élément de surface (4) et d'une couche supplémentaire (7) correspondant à ladite autre ébauche thermocomprimée (12) et la couverture d'au moins l'élément de surface (4).

29. Procédé selon l'une quelconque des revendications 21 à 28, **caractérisé en ce qu'**il comprend l'application d'une couche de revêtement supérieure (3) qui s'étend sur une partie ou sur la totalité de la couche de support (2) et recouvre au moins la ou les zones fonctionnelles (4') de l'au moins un élément de surface (4), ladite couche de revêtement supérieure (3) étant constituée soit d'un revêtement protecteur, soit d'une couche de protection, telle qu'une peinture ou un vernis transparent ou translucide, incorporant éventuellement des éléments décoratifs supplémentaires, tels que par exemple des pigments, des particules ou similaires, soit d'une couche décorative matérielle choisie dans le groupe comprenant les tissus textiles, les non-tissés, les peaux en PVC, les peaux en TPO, les films en PP, les peaux en cuir et les placages en liège, en bois ou en pierre.

30. Procédé selon la revendication 29, **caractérisé en ce qu'**une couche de confort (9) constituée d'une couche de mousse est présente au dos ou à l'arrière de la couche décorative matérielle (3), opposée à la face exposée (1') de ladite pièce de garniture (1).

31. Procédé selon l'une quelconque des revendications 21 à 30, **caractérisé en ce que** la disposition de l'élément fonctionnel de surface mince (4) sur l'ébauche (5) destinée à former la couche de support (2) est guidée et verrouillée en position au moyen d'éléments d'indexation lorsqu'elle est placée dans le moule de thermoformage (10).
